# EUROPÄISCHE PATENTSCHRIFT

(11) **EP 4 090 865 B1**
(45) Veröffentlichungstag und Bekanntmachung des Hinweises auf die Patenterteilung: **03.07.2024**
(21) Anmeldenummer: 21700703.8
(22) Anmeldetag: 13.01.2021
(51) Int. Cl.: F16J 15/02, H01M 8/026, B65D 25/00

(54) **VERFAHREN ZUM AUTOMATISIERTEN APPLIZIEREN EINER MEHRTEILIGEN GEHÄUSEDICHTUNG SOWIE GEHÄUSE UMFASSEND EINE MEHRTEILIGE GEHÄUSEDICHTUNG**
METHOD FOR THE AUTOMATED APPLICATION OF A MULTI-PART HOUSING SEAL, AND HOUSING COMPRISING A MULTI-PART HOUSING SEAL
PROCÉDÉ POUR L'APPLICATION AUTOMATISÉE D'UN JOINT D'ÉTANCHÉITÉ DE BOÎTIER EN PLUSIEURS PARTIES, ET BOÎTIER COMPRENANT UN JOINT D'ÉTANCHÉITÉ DE BOÎTIER EN PLUSIEURS PARTIES

(30) Priorität: 15.01.2020 DE 102020200450
(43) Veröffentlichungstag der Anmeldung: 23.11.2022
(73) Patentinhaber: tesa SE, 22848 Norderstedt (DE)
(72) Erfinder: AKIN, Deniz Nick, 22848 Norderstedt (DE); ELSENBACH, Kim, 22848 Norderstedt (DE); WANG, Li, 22848 Norderstedt (DE); WATZKE, Wilhelm, 22848 Norderstedt (DE)
(74) Vertreter: tesa SE
(86) Internationale Anmeldenummer: PCT/EP2021/050583
(87) Internationale Veröffentlichungsnummer: WO 2021/144305

(56) Entgegenhaltungen:
- EP-A1- 2 194 108
- EP-A1- 3 401 455
- EP-A2- 1 235 007
- EP-A2- 2 541 104
- WO-A1-2016/024939

## Beschreibung

Die Erfindung betrifft ein Gehäuse umfassend eine mehrteilige Gehäusedichtung. Die Erfindung betrifft auch ein Verfahren zum automatisierten Applizieren einer mehrteiligen Gehäusedichtung.

Die Erfindung betrifft das technische Gebiet der Dichtungen, wie sie im Haushalt und in der Industrie vielfach zum Abdichten und zum Verhindern einer Fluidkommunikation zwischen zwei Volumen eingesetzt werden. Spezifischer wird ein zum Abdichten eine Mehrteilige Gehäusedichtung vorgeschlagen, wobei die mehrteilige Dichtung nicht in sich Geschlossen ist, sondern aus endlich langen Dichtstreifen besteht.

Für viele Konstruktionen auf unterschiedlichen Gebieten der Technik, beispielsweise im Bauwesen und im Fahrzeugbau, werden Abdichtungen benötigt. Die dafür verwendeten Dichtelemente sollen Spalte, wie sie beim Verbinden zweier Bauteile nahezu unvermeidlich entstehen, häufig gegen das Eindringen von Feuchtigkeit und Luft abdichten, um dahinter liegende Teile vor dadurch hervorgerufenen Schäden, z.B. vor Korrosion, zu bewahren. Mechanische Verbindungen, wie sie z.B. durch Schrauben bewirkt werden, sind in aller Regel nicht in der Lage, eine ausreichende Abdichtung zu bewirken.

Häufig werden daher z.B. Silikon-Dichtmassen verwendet, um eine entsprechende Versiegelung der hergestellten Verbindungen zu erreichen. Derartige Dichtmassen lassen sich recht zuverlässig verarbeiten, benötigen jedoch eine bestimmte Zeit zum Aushärten und verursachen damit häufig prozesstechnische Schwierigkeiten. Ähnlich verhält es sich mit anderen strukturellen Kleb- bzw. Dichtstoffen, z.B. mit solchen auf Basis von Epoxiden oder Polyurethanen.

Auch Silikonschäume werden als Dichtmassen eingesetzt, sie zeichnen sich durch gute Flammschutzeigenschaften und ihre Wiederverwendbarkeit aus. Andererseits ist es schwierig, sie in einem automatisierten Prozess zu verarbeiten, zudem sind sie vergleichsweise teuer.

Butyl-Dichtmassen sind etabliert und preiswert, andererseits hinsichtlich ihrer Dosierung schwierig zu kontrollieren und wenig alterungsbeständig. Zudem werden sie bei höheren Drücken häufig aus dem Spalt gequetscht.

Elastische Dichtstoffe wie Gummis bzw. Styrol-Butadien-Kautschuke bieten bewährte Abdichtungseigenschaften und sind zudem sehr temperaturstabil. Da sie nicht selbsthaftend sind, ist ihre Handhabung allerdings eher schwierig; zudem sind sie unflexibel, das jeweilige Dichtelement muss daher exakt zum abzudichtenden Spalt passen.

Polyurethanschäume zeigen ein gutes Kompressionsverhalten und lassen sich automatisiert verarbeiten; zudem sind sogenannte foam-in-place-Anwendungen möglich. Nachteilig sind Schwankungen in den Abmessungen des betreffenden Schaums, zudem sind diese Stoffe anfällig für Korrosion und Abbau unter dem Einfluss bestimmter Reinigungsmittel.

Ein ähnliches Eigenschaftsprofil zeigen EPDM-Schäume; auch mit ihnen lässt sich wegen ihrer unregelmäßigen Oberflächengestaltung nur eine begrenzte Abdichtungswirkung erzielen.

Aus der EP 3 346 518 A1 ist eine Dichtung bekannt, die auf einen Gehäusedeckel respektive eine Gehäusewanne eines Batteriemoduls aufgebracht wird. Dabei wird ein Dichtmaterial in eine Vertiefung eingelassen, um eine Dichtwirkung zu verbessern. Die Dichtung ist eine "form-in-place foam gaskets" (FIPFG), wobei flüssiger Schaum auf einen Gehäusedeckel oder -wanne aufgebracht wird. Diese Anwendung hat die vorgenannten Nachteile, die geschäumte oder flüssig aufgetragene Dichtmassen mit sich bringen.

Aus der DE 9 106 710 U1 ist eine mehrteilige Flachdichtung bekannt bei der eine Flachdichtung aus mehreren Abschnitten eines herkömmlichen Dichtungsmaterials zusammengesetzt wird. Die Teile werden über komplementär ausgeführte meanderförmige Schnitte miteinander verbunden, um einen Formschluss an den Kontaktstellen zu erreichen.

Daran ist nachteilig, dass die Teile aus der die Flachdichtung zusammengesetzt wird in Herstellung und Verarbeitung aufwendig ist. Auch der Applikationsprozess ist sehr aufwendig, da die Teile passend ineinander gesetzt werden müssen. Die beschriebene mehrteilige Flachdichtung ist für eine automatisierte Applikation wenig bis gar nicht geeignet, da die Anforderungen an die Applikationspräzision sehr hoch sind.

Aus der DE 20 2018 105 005 U1 ist eine mehrteilige Flachdichtung mit Metalleinlage und Positionierstiften bekannt. Die Metalleinlage dient als "Positionierschiene" für die daran angespritzte Elastomerdichtung. Die Positionierschienen können aneinandergesetzt werden und so größere Dichtungen zusammengesetzte werden, ohne dass dafür große Stanzteile erzeugt werden müssen. Das beschriebene Dichtungskonzept ist sehr komplex in Herstellung und Anwendung, da es aus verschiedenen Komponenten zusammengesetzt wird. Insbesondere sind die Abschnitte kein Endlosmaterial, sondern besteht aus Metallabschnitten die einzeln gefertigt werden und an die Dichtungsform angepasst werden müssen.

Die EP 2 541 104 A2 beschreibt eine Dichtung, umfassend eine Klebefolie und eine auf eine Oberfläche der Klebefolie laminierte Substratfolie, die eine bestimmte Verformungserholungsrate zeigt.

Die EP 2 194 108 A1 offenbart ein Dichtungsmaterial mit ausgezeichneter Wasserbeständigkeit für lange Zeit. Das Dichtungsmaterial umfasst: eine Gummiharzfolie und eine thermoplastische Harzschaumschicht, die zumindest auf einer Oberfläche der Gummiharzfolie ausgebildet ist.

Es besteht daher ein Bedarf an gut anwendbaren und verarbeitbaren Systemen zur zuverlässigen Abdichtung von Verbindungen zwischen Bauteilen.

Aufgabe der Erfindung war es somit, ein einfach zu applizierendes Dichtmaterial mit hoher Abdichtungswirkung gegen Luft und Feuchtigkeit bereitzustellen, das zudem die Möglichkeit bietet, die abgedichteten Öffnung unkompliziert wieder zu öffnen und wieder zu schließen.

Eine Anwendung liegt im Bereich der Batteriemodule. Sie enthalten eine Vielzahl von Batteriezellen, die in einem Gehäuse vor mechanischer Einwirkung von außen, aber auch vor dem Einwirken von Feuchtigkeit geschützt werden müssen. Dazu wird zwischen Gehäusedeckel und Gehäusewanne ein Flansch ausgebildet und durch eine Dichtmasse abgedichtet. Die Verwendung von Dichtmassen hat die zuvor beschriebenen Nachteile.

Es ist Aufgabe der Erfindung die eingangs genannten Nachteile von Dichtmassen zu überwinden. Zudem ist es Aufgabe der Erfindung eine einfache und zuverlässige automatisierte Applikation der mehrteiligen Gehäusedichtung zu ermöglichen.

Die Aufgabe wird in ihrem ersten Aspekt gelöst durch ein Gehäuse umfassend eine mehrteilige Gehäusedichtung mit den Merkmalen des Anspruchs 1.

Demgemäß betrifft die Erfindung ein Gehäuse umfassend
- ein erstes Gehäuseelement,
- ein zweites Gehäuseelement und
   eine zwischen dem ersten Gehäuseelement und dem zweiten Gehäuseelement angeordnete mehrteilige Gehäusedichtung zur Abdichtung eines Gehäuseinneren gegenüber einem Gehäuseäußeren, umfassend einen ersten elastischen Klebestreifen und einen zweiten elastischen Klebestreifen, wobei der erste und zweite Klebestreifen zwischen dem ersten Gehäuseelement und dem zweiten Gehäuseelement angeordnet sind, wobei
- der erste Klebestreifen einen ersten Endabschnitt mit einer ersten Stirnseite und einer ersten Kantenfläche und einen zweiten Endabschnitt mit einer zweiten Stirnseite und einer zweiten Kantenfläche umfasst, und derart zwischen dem ersten Gehäuseelement und dem zweiten Gehäuseelement angeordnet ist, dass
   ∘ die erste Stirnseite und die zweite Stirnseite gegenüberliegend zueinander und durch einen Applikationsspalt voneinander getrennt angeordnet sind, und
   ∘ die erste und zweite Kantenfläche im Wesentlichen in einer Ebene liegen, und
   ∘ wobei der erste Klebestreifen zwischen dem ersten Gehäuseelement und dem zweiten Gehäuseelement, mit Ausnahme des Applikationsspalts, in einem geschlossenen Umlauf angeordnet ist, und
- der zweite Klebestreifen derart zwischen dem ersten Gehäuseelement und dem zweiten Gehäuseelement angeordnet ist, dass
   ∘ eine erste Kantenfläche des zweiten Klebestreifens mit der ersten Kantenfläche des ersten Klebestreifens in Kontakt steht und einen ersten Dichtspalt bildet, und
   ∘ eine zweite Kantenfläche des zweiten Klebestreifens mit der zweiten Kantenfläche des ersten Klebestreifens in Kontakt steht und einen zweiten Dichtspalt bildet, und
   eine dritte Kantenfläche des zweiten Klebestreifens den Applikationsspalt überdeckt, sodass, wenn das erste Gehäuseelement und das zweite Gehäuseelement mit einer Kraft F gegeneinandergepresst werden, der erste elastische Klebestreifen und der zweite elastische Klebestreifen gestaucht werden und diese in Richtung der Kantenflächen expandieren, wodurch die erste Kantenfläche des zweiten Klebestreifens und die erste Kantenfläche des ersten Klebestreifens gegeneinander gepresst werden und den ersten Dichtspalt abdichten, und die zweite Kantenfläche des zweiten Klebestreifens und die zweite Kantenfläche des ersten Klebestreifens gegeneinander gepresst werden und den zweiten Dichtspalt abdichten, wodurch eine Fluidkommunikation zwischen dem Gehäuseinneren und dem Gehäuseäußeren unterbunden wird.

Demgemäß erfolgt die Abdichtung nun durch ein Klebeband welches zu Klebestreifen abgelängt wird und in einer spezifischen Anordnung auf Gehäuseelemente automatisiert aufgetragen werden kann und so eine 100% automatisierte Applikation und Abdichtung ermöglicht.

Der Erfindung liegt die Erkenntnis zugrunde, dass durch eine erfindungsgemäße Anordnung auch aus einem kontinuierlichen elastischen Klebeband, also keiner gestanzten Flachdichtung, sondern einem von einer Klebebandrolle abgerollten und abgetrennten Klebestreifen, ein Ringschluss aus mehreren elastischen Klebestreifen erzeugt werden kann, der Wasserdichtigkeits- und Korrosionstests standhält. Eine Besonderheit der hier beschriebenen Erfindung besteht also darin, dass die Gehäusedichtung aus mehreren Teilen aufgebaut ist. Üblicherweise werden in sich geschlossene Dichtungen, wie Dichtringe oder eine aus einem Bogen gestanzte Flachdichtung eingesetzt. Diese weisen keinen Spalt oder Unterbrechung auf, sondern bilden einen in sich geschlossenen Umlauf.

Erfindungsgemäß werden zwei endlich lange und nicht in sich geschlossene elastische Klebestreifen derart auf einem Gehäuseelement, beispielsweise einem Dichtflansch eines Gehäuses, angeordnet, dass beim Verschließen des Gehäuses eine Dichtwirkung einsetzt, die das Eindringen von Feuchtigkeit in das Gehäuseinnere zuverlässig verhindert. Dabei bildet der erste Klebestreifen einen nicht vollständig geschlossenen Umlauf. Der Umlauf kann eine beliebigen Verlauf oder Kontur beschreiben. Der Umlauf ist nicht geschlossen, da er durch den Applikationsspalt unterbrochen ist. Der Umlauf des ersten Klebestreifens befindet sich vorzugsweise in einer Ebene, der erste Klebestreifen ist also in einer Ebene liegend auf einem Gehäuseelement aufgebracht, also aufgeklebt.

Das erfindungsgemäß eingesetzte Dichtmaterial wird durch elastische Klebestreifen gebildet, die als Abschnitte eines Klebebandes bereitgestellt werden. Üblicherweise werden Klebebänder in festen Längen wie zum Beispiel als Meterware oder als Endlosware in Form von Rollen (archimedische Spirale) oder auf einen Kern gewickelten Spulen zur Verfügung gestellt.

Sofern ein im Folgenden ein Klebestreifen erwähnt wird ist stets ein elastischer Klebestreifen gemeint.

Im Sinne der Erfindung werden unter einem Klebeband alle flächigen Gebilde wie in zwei Dimensionen ausgedehnte Folien oder Folienabschnitte, Bänder mit ausgedehnter Länge und begrenzter Breite, Bandabschnitte und dergleichen, und letztlich auch Stanzlinge verstanden. Ein Klebeband im Sinne der Erfindung kann ein- oder beidseitig mit einer Klebmasse beaufschlagt sein. Üblicherweise weisen Klebebänder Lauflängen von wenigen 10 m bis 30.000 m auf. Übliche Breiten von Klebebandrollen oder Klebebandspulen sind 10, 15, 19, 25 und 30 mm. Aber auch andere Lauflängen und Klebebandbreiten existieren und sind von der erfindungsgemäßen Lehre nicht ausgenommen. Das Klebeband kann sowohl in Form einer Rolle, also in Form einer archimedischen Spirale auf sich selbst aufgerollt, oder auf einem Spulenkörper aufgewickelt sein.

Ein Klebeband weist eine flächig ausgedehnte Oberseite und einer der Oberseite gegenüberliegende Unterseite auf. Oberseite und Unterseite sind im Wesentlichen koplanar in einem Abstand d, der der Dicke des Klebebandes entspricht, angeordnet und weisen jeweils eine Breite b auf. An den Kanten des Klebebandes entstehen Kantenflächen, die im Wesentlichen senkrecht zu der Oberseite und der Unterseite angeordnet sind. Dass die Kantenflächen nahezu senkrecht sind, resultiert aus der Herstellung eines Klebebandes aus einer Mutterrolle auf hochpräzisen Fertigungsanlagen, bei dem mehrere Klebebänder von einer Mutterrolle abgestochen werden, also die Mutterrolle beispielsweise durch Rollenmessern vereinzelt wird. Durch die Fertigungsanlagen wird auch erreicht, dass die Kantenflächen eines Klebebandes nahezu plan sind, also gleichmäßig flach in Richtung der Längsrichtung des Klebebandes, dass Die Breite b eines Klebebandes ist üblicherweise größer oder gleich der Dicke d. Die Kantenflächen haben somit eine hohe Oberflächenqualität und sind exakt in ihrer geometrischen Anordnung gegenüber der Ober- und Unterseite des Klebebandes. Die Längsrichtung ergibt sich durch die Richtung des Klebebandes in der es Aufgewickelt oder abgewickelt wird. In Längsrichtung hat ein Klebeband die längste Erstreckung.

Im Sinne der Erfindung soll unter einem Klebestreifen, ein von einem Klebeband abgetrennter Abschnitt verstanden werden. Der allgemeine Ausdruck "Klebestreifen" umfasst im Sinne dieser Erfindung alle ein- oder beidseitig selbstklebend ausgestatteten flächigen Gebilde wie in zwei Dimensionen ausgedehnte Folien oder Folienabschnitte, Bänder mit ausgedehnter Länge und begrenzter Breite, Bandabschnitte, Stanzlinge und dergleichen sowie entsprechende Mehrschichtanordnungen. Die Geometrien und Eigenschaften des zuvor beschriebenen Klebebandes gelten ebenso für Klebestreifen, da ein Klebestreifen im Sinne der Erfindung lediglich ein abgetrennter Teil eines Klebebandes ist.

Die Länge eines Klebestreifens ist also immer kleiner als die Länge eines Klebebands. Ein Klebestreifen weist durch das Abtrennen von dem Klebeband in der Regel zwei Schnittkanten auf. Die Schnittkanten bilden die Stirnseiten des Klebestreifens. Diese sind üblicherweise im Wesentlichen senkrecht angeordnet. Da ein Klebestreifen jedoch häufig erst bei der Verwendung durch einen Werker oder durch eine Maschine abgetrennt wird ist hier nicht von einer so hohen Oberflächenqualität und exakten geometrischen Anordnung der Stirnseite gegenüber der Oberseite- und der Unterseite des Klebestreifens auszugehen.

Die Erfindung berücksichtigt diesen Anwendungstechnischen Effekt in geschickter Weise, indem die Anordnung der mehrteiligen Gehäusedichtung vorsieht, dass nur die wohldefinierten Kantenflächen der Klebebandstreifen miteinander in Kontakt gebracht werden und den Dichtspalt bilden.

Durch die Anordnung der mehrteiligen Gehäusedichtung, insbesondere durch den Einsatz eines zweiten Klebestreifens zum Abdichten, wird somit wirksam vermieden, dass am Applikationsort Schnittkanten erzeugte verwendet werden, um einen Dichtspalt zu bilden und diesen abzudichten.

Darüber hinaus berücksichtigt die erfindungsgemäße mehrteilige Gehäusedichtung auch die Tatsache, dass in einem automatisierten Applikationsprozess die Stirnseiten der Klebestreifen durch einen Applikator nicht beliebig nahe oder sogar in Kontakt stehend auf ein Gehäuseelement aufgebracht werden können. Ein automatisierter Klebeband-Applikator, vorzugsweise ein robotergeführter Klebeband-Applikator, unterliegt Limitierungen die das Applizieren von Klebebändern von fortlaufenden Abschnitten, die jeweils über ihre Stirnseiten in Kontakt stehen, verhindern oder zumindest stark erschweren. Die erfindungsgemäße mehrteilige Gehäusedichtung umgeht dieses aus der Anwendung kommende Problem, indem ein Applikationsspalt vorgesehen wird, die Stirnseiten also nicht in Kontakt gebracht werden. Die Klebestreifen werden so auf ein Gehäuseelement aufgebracht, dass ein definierter Applikationsspalt I_{A} entsteht. Dadurch wird insbesondere die Oberflächenqualität der Stirnseiten des ersten Klebestreifens und deren exakten geometrischen Anordnung zur Erreichung der Dichtwirkung der mehrteiligen Gehäusedichtung vernachlässigbar.

Durch den Applikationsspalt wird darüber hinaus auch vermieden, dass sich die Endabschnitte überlappen, beispielsweise dass die Unterseite eines ersten Endabschnitts des ersten Klebestreifens und die Oberseite eines zweiten Endabschnitts des ersten Klebestreifens überlappen. Dieser Fall kann durch ein nicht exaktes Applizieren durch den Applikationskopf auftreten. Dies würde zur Undichtigkeit der mehrteiligen Gehäusedichtung führen.

Keinesfalls, ist jedoch ausgeschlossen, dass der erste Dichtstreifen so angeordnet wird, sei es händisch oder durch einen robotergeführten Applikationskopf, dass die erste und zweite Stirnfläche in Kontakt stehen. Eine Dichtwirkung kann auch dann erreicht werden. Stehen die Stirnflächen jedoch nicht in Kontakt, führt das zu den vorgenannten Vorteilen.

Unter elastisch soll die Eigenschaft eines Klebestreifens oder Klebebandes verstanden werden unter Krafteinwirkung seine geometrische Form zu verändern und bei Wegfall der einwirkenden Kraft in die ursprüngliche vor der Krafteinwirkung vorliegenden Form zurückzukehren. Dabei sollen unter dem Begriff elastisch sowohl linear-elastische Verhalten der Klebestreifen als auch nicht-linear elastische Verhalten der Klebestreifen verstanden werden. Da die Klebestreifen Polymermaterialien umfassen, ist unter dem Begriff elastisch auch ein viskoelastisches Verhalten zu verstehen.

Wenn das erste Gehäuseelement und das zweite Gehäuseelement mit einer Kraft F gegeneinandergepresst werden, werden der erste und zweite elastische Klebestreifen gestaucht, also verformt, und expandieren in Richtung der Kantenflächen, also quer zur Längsrichtung der Klebestreifen. Dabei erfolgt die Krafteinwirkung flächig, vorzugsweise gleichverteilt über die gesamte Kontaktfläche zwischen erstem und zweitem Klebestreifen und dem ersten und zweiten Gehäuseelement, also gleichmäßig verteilt über die Ober- und Unterseite der Klebestreifen und nicht etwa punktuell.

Durch die Expansion der Klebestreifen in Richtung der Kantenflächen werden die in Kontakt stehenden Kantenflächen des ersten und zweiten Klebestreifens gegeneinander gepresst und dichten so den ersten und zweiten Dichtspalt ab. So wird dann eine Fluidkommunikation zwischen dem Gehäuseinneren und dem Gehäuseäußeren zuverlässig unterbunden.

Da die mehrteilige Gehäusedichtung nicht geschlossen ist, sondern aus zwei streifenförmigen endlichen Klebestreifen besteht, ist der Dichtspalt die Schwachstelle für die Dichtheit. Wie sich gezeigt hat, hat die Anordnung der Klebestreifen eine große Bedeutung. Sie hat bedeutenden Einfluss zum einen auf die Dichtheit der mehrteiligen Gehäusedichtung und zum anderen auf die Prozesssicherheit der automatisierten Applikation. Aber auch die Eigenschaften der Klebstreifen und deren Schichtaufbau müssen auf diese Anwendung abgestimmt sein.

Der erste und zweite Klebestreifen umfassen eine Haftklebmasse, also eine Klebmasse, die bereits unter relativ schwachem Andruck eine dauerhafte Verbindung mit fast allen Haftgründen erlaubt. Eine Haftklebmasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebmasse beruht auf ihren adhäsiven Eigenschaften und die Wiederablösbarkeit auf ihren kohäsiven Eigenschaften.

Eine Klebmasse im Sinne der Erfindung kann ein Kleber auf Basis von Naturkautschuk, Synthesekautschuk oder Acrylat umfassen. Aber auch andere Kleber können eingesetzt werden. Die Klebmasse kann neben dem Kleber zusätzlich Stoffe umfassen wie z.B. chemische oder mechanische Stabilisatoren, Farbpigmente, Fasern, Granulate, phosphoreszierende Stoffe, medizinisch wirksame Stoffe oder Medikamente, magnetische oder magnetisierbare Partikel, oder andere Stoffe, die die Eigenschaften der Klebmasse konditionieren können. Insbesondere ist unter einer Klebmasse auch eine Haftklebmasse zu verstehen.

Unter einer "Haftklebmasse" wird entsprechend dem allgemeinen Verständnis des Fachmanns ein viskoelastischer Klebstoff verstanden, dessen abgebundener, trockener Film bei Raumtemperatur permanent klebrig ist und klebfähig bleibt sowie durch leichten Anpressdruck auf einer Vielzahl von Substraten verklebt werden kann.

Dadurch, dass die erfindungsgemäße mehrteilige Gehäusedichtung auf einer Seite auf eines der Gehäuseelemente aufgeklebt ist, verbleibt die mehrteilige Gehäusedichtung an dem Ort an dem die appliziert wurde. Insbesondre fällt sie nicht heraus, wie die bei Dichtringen, Dichtschnüren oder nicht selbstklebenden Flachdichtungen der Fall ist. Dadurch wird neben den sich daraus ergebenden handhabungstechnischen Vorteilen sichergestellt, dass die Dichtwirkung der mehrteiligen Gehäusedichtung trotz des Öffnens des Gehäuses und Trennen der Gehäuseelemente voneinander die Dichtwirkung bei Wiederverschließen wieder erreicht wird, da sich die Anordnung der des Ersten und zweiten Klebestreifens nicht ändert.

In der Regel besteht ein Klebeband aus einem Träger und mindestens einer darauf aufgebrachten Klebmasse. Es existieren aber auch Klebebänder ohne Träger. Besonders bevorzugt ist es dass das der erste und zweite Klebestreifen trägerlos aufgebaut sind, der Träger durch eine Klebmasse selbst gebildet wird ist.

Wie sich gezeigt hat, lässt sich die erfindungsgemäße Anordnung zweier Klebestreifen vorteilhaft zum Abdichten von Gehäusen verwenden, wobei es zum einen eine einfache, sichere und exakte Applikation erlaubt und zum anderen eine einfache Demontage der einzelner Gehäuseelemente eines Gehäuses ermöglicht.

Die mehrteilige Gehäusedichtung kann vorteilhaft weitergebildet werden, indem der zweite Klebestreifen derart gegenüber dem ersten Klebestreifen angeordnet ist, dass eine Längsrichtung des zweiten Klebestreifen
- parallel zu einer Längsrichtung des ersten Endabschnitts verläuft, und
- parallel zu einer Längsrichtung des zweiten Endabschnitts verläuft.

Durch die parallele Anordnung des zweiten Klebestreifens zu der Längsrichtung des ersten Endabschnitts sind auch die erste Kantenfläche des zweiten Klebestreifens und die erste Kantenfläche des ersten Klebestreifens parallel angeordnet. Die den Dichtspalt bildende und in Kontakt stehenden Kantenflächen sind so plan aufeinanderliegend angeordnet. Dadurch wird der Dichtspalt besonders gleichmäßig abgedichtet, da bei der Abdichtung die Kraft die durch die Expansion der Klebestreifen auf die in Kontakt stehenden Kantenflächen einwirkt, gleichmäßig verteilt ist.

Dies trifft analog auch auf die zweite Kantenfläche des zweiten Klebestreifens mit der zweiten Kantenfläche des ersten Klebestreifens zu.

Unter einer Längsrichtung des Klebebands wird diejenige Richtung verstanden, in der ein Klebeband üblicherweise abgerollt wird. In der Regel ist diese Richtung durch die längliche Ausdehnung des Klebebandes bestimmt. Bei Klebebandabschnitten oder Klebebandzuschnitten, deren Ab- oder Zuschnitt kürzer ist als die Breite des Klebmassenbereiches, ist die Längsrichtung des Klebebandes durch die kürzere Ausdehnung des Ab- oder Zuschnitts bestimmt. Unter Ab- oder Zuschnitten sollen auch Stanzlinge oder Etiketten verstanden werden.

Durch die parallele Anordnung sind insbesondere die Kantenflächen koplanar angeordnet, was zu einer besseren Dichtwirkung im ersten und zweiten Dichtspalt führt, wenn das erste Gehäuseelement und das zweite Gehäuseelement mit einer Kraft F gegeneinandergepresst werden.

Diese Anordnung vereinfacht auch das Applizieren der Klebestreifen, da während eines Applikationsprozesses der erste und zweite Klebestreifen im Bereich der in Kontakt stehenden Kantenflächen nur geradlinig bewegt wird, also ohne eine Krümmung oder Kurve zu beschreiben. Dies führt auch dazu, dass der Applikationsprozess einfacher und zuverlässiger durchgeführt werden kann und eine Dichtwirkung der mehrteiligen Gehäusedichtung gewährleistet werden kann.

Es ist aber ebenso möglich, den ersten und zweiten Klebestreifen im Bereich der in Kontakt stehenden Kantenflächen eine Kurve beschreiben zu lassen. Auch bei solch einer Anordnung kann eine ausreichende Dichtwirkung des ersten und zweiten Dichtspalts erreicht werden.

Der Aufbau bzw. die Schichtabfolge der Klebestreifen umfasst mehrere Varianten. In einer bevorzugten Ausgestaltung der elastischen Klebestreifen umfassen die Klebestreifen eine Polymerschaumschicht und eine Haftklebmasseschicht. Die nicht beschichtete Seite der Polymerschaumschicht weist eine schwächere Klebkraft als die Haftklebmasseschicht. Bevorzugt enthält die Polymerschaumschicht mindestens ein Poly(meth)acrylat.

Die mehrteilige Gehäusedichtung kann vorteilhaft weitergebildet werden, indem der erste und/oder zweite Klebestreifen eine Polymerschaumschicht umfasst und eine erste Seite der Polymerschaumschicht eine Haftklebmasseschicht aufweist.

Die Polymerschaumschicht, insbesondere das Matrixmaterial der Polymerschaumschicht, enthält mindestens ein Poly(meth)acrylat. Unter einem "Poly(meth)acrylat" wird ein Polymer verstanden, welches durch radikalische Polymerisation von Acryl- und/oder Methacrylmonomeren sowie gegebenenfalls weiteren, copolymerisierbaren Monomeren erhältlich ist. Insbesondere wird unter einem "Poly(meth)acrylat" ein Polymer verstanden, dessen Monomerbasis zu mindestens 50 Gew.-% aus Acrylsäure, Methacrylsäure, Acrylsäureestern und/oder Methacrylsäureestern besteht, wobei Acrylsäureester und/oder Methacrylsäureester zumindest anteilig, bevorzugt zu mindestens 30 Gew.-%, bezogen auf die gesamte Monomerbasis des betreffenden Polymers, enthalten sind.

Bevorzugt enthält die Polymerschaumschicht Poly(meth)acrylate zu insgesamt 40 bis 99,9 Gew.-%, stärker bevorzugt zu insgesamt 60 bis 98 Gew.-%, insbesondere zu insgesamt 75 bis 95 Gew.-%, beispielsweise zu insgesamt 80 bis 90 Gew.-%, jeweils bezogen auf das Gesamtgewicht der Polymerschaumschicht. Es können ein (einziges) Poly(meth)acrylat oder mehrere Poly(meth)acrylate enthalten sein; der Pluralausdruck "Poly(meth)acrylate" schließt also - auch im Fortgang der vorliegenden Beschreibung - in seiner Bedeutung ebenso wie der Ausdruck "insgesamt" sowohl das Vorliegen eines einzigen Poly(meth)acrylats als auch das Vorliegen mehrerer Poly(meth)acrylate ein.

Die Glasübergangstemperatur der Poly(meth)acrylate beträgt bevorzugt < 0 °C, stärker bevorzugt zwischen -20 und -50 °C. Die Glasübergangstemperatur von Polymeren oder von Polymerblöcken in Blockcopolymeren wird erfindungsgemäß mittels Dynamischer Scanning Kalorimetrie (DSC) bestimmt. Dazu werden ca. 5 mg einer unbehandelten Polymerprobe in ein Aluminiumtiegelchen (Volumen 25 µl) eingewogen und mit einem gelochten Deckel verschlossen. Zur Messung wird ein DSC 204 F1 der Firma Netzsch verwendet. Es wird zwecks Inertisierung unter Stickstoff gearbeitet. Die Probe wird zunächst auf -150 °C abgekühlt, dann mit einer Heizrate von 10 K/min bis +150 °C aufgeheizt und erneut auf -150 °C abgekühlt. Die sich anschließende zweite Heizkurve wird erneut bei 10 K/min gefahren und die Änderung der Wärmekapazität aufgenommen. Glasübergänge werden als Stufen im Thermogramm erkannt.

Bevorzugt enthält das Poly(meth)acrylat zumindest ein anteilig einpolymerisiertes funktionelles, besonders bevorzugt mit Epoxidgruppen unter Ausbildung einer kovalenten Bindung reaktives Monomer. Ganz besonders bevorzugt enthält das anteilig einpolymerisierte funktionelle, besonders bevorzugt mit Epoxidgruppen unter Ausbildung einer kovalenten Bindung reaktive Monomer mindestens eine funktionelle Gruppe ausgewählt aus der Gruppe bestehend aus Carbonsäuregruppen, Sulfonsäuregruppen, Phosphonsäuregruppen, Hydroxygruppen, Säureanhydridgruppen, Epoxidgruppen und Aminogruppen; insbesondere enthält es mindestens eine Carbonsäuregruppe. Äußerst bevorzugt enthält das Poly(meth)acrylat anteilig einpolymerisierte Acrylsäure und/oder Methacrylsäure. All die genannten Gruppen weisen eine Reaktivität mit Epoxidgruppen auf, wodurch das Poly(meth)acrylat vorteilhaft einer thermischen Vernetzung mit eingebrachten Epoxiden zugänglich wird.

Bevorzugt sind die Poly(meth)acrylate mittels Epoxid(en) bzw. mittels einer oder mehrerer epoxidgruppenhaltigen Substanz(en) vernetzt. Bei den epoxidgruppenhaltigen Substanzen handelt es sich insbesondere um multifunktionelle Epoxide, also solche mit zumindest zwei Epoxidgruppen; entsprechend kommt es insgesamt zu einer mittelbaren Verknüpfung der die funktionellen Gruppen tragenden Bausteine der Poly(meth)acrylate. Die epoxidgruppenhaltigen Substanzen können sowohl aromatische als auch aliphatische Verbindungen sein.

Die Haftklebmasseschicht enthält bevorzugt zu mindestens 50 Gew.-%, stärker bevorzugt zu mindestens 70 Gew.-%, besonders bevorzugt zu mindestens 90 Gew.-%, insbesondere zu mindestens 95 Gew.-%, beispielsweise zu mindestens 97 Gew.-%, jeweils bezogen auf das Gesamtgewicht der Haftklebmasseschicht, ein oder mehrere Poly(meth)acrylat(e).

Insbesondere ist das Poly(meth)acrylat der äußeren Haftklebmasseschicht auf eine Monomerenzusammensetzung bestehend aus
70 bis 95 Gew.-% 2-Ethylhexylacrylat, n-Butylacrylat und/oder Isobornylacrylat; insbesondere n-Butylacrylat und 2-Ethylhexylacrylat;
1 bis 15 Gew.-% Acrylsäure; und
0 bis 15 Gew.-% Methylacrylat
zurückzuführen.

Die Poly(meth)acrylate der äußeren Haftklebmasseschicht sind bevorzugt thermisch, insbesondere kovalent und/oder koordinativ vernetzt. Bevorzugte kovalente Vernetzer Epoxyverbindungen, bevorzugte koordinative Vernetzer sind Aluminiumchelate.

Das gewichtsmittlere Molekulargewicht M_{w} der Poly(meth)acrylate der äußeren Haftklebmasseschicht beträgt bevorzugt 20.000 bis 2.000.000 g/mol, besonders bevorzugt 100.000 bis 1.500.000 g/mol, insbesondere 200.000 bis 1.200.000 g/mol. Die Angaben des mittleren Molekulargewichtes M_{w} in dieser Schrift beziehen sich auf die Bestimmung per Gelpermeationschromatographie.

Die mehrteilige Gehäusedichtung kann vorteilhaft weitergebildet werden, indem die Polymerschaumschicht selbst eine Haftklebmasse ist, insbesondere ein haftklebriger acrylatbasierter Polymerschaum, insbesondere mindestens ein Poly(meth)acrylat enthält. Zu den Eigenschaften und Formulierungen sei an dieser Stelle auf die vorangegangenen Ausführungen zu der Polymerschaumschicht, insbesondere das Matrixmaterial der Polymerschaumschicht verwiesen.

Dadurch kann die mehrteilige Gehäusedichtung von den Vorteilen die acrylatbasierte Haftklebemassen haben bei der Abdichtung profitieren. Ein acrylatbasierter Polymerschaum besitzt viskoelastische Eigenschaften. Dadurch fließen der erste und zweite Klebestreifen bei Berührung der ersten und zweiten Kantenflächen des ersten und zweiten Endabschnitts auf die erste und zweite Kantenfläche des zweiten Klebestreifens. Durch das von viskoelastischen Materialien bekannte Verhalten des auffließen, welche mit einer starken Benetzung einer Oberfläche gleichzusetzen ist, wird die Dichtwirkung der mehrteiligen Gehäusedichtung in den Dichtspalten verbessert. Zudem weist ein acrylatbasierter Polymerschaum eine sehr gute Temperaturbeständigkeit in Temperaturbereichen von -20 - +120°C auf, wobei ein acrylatbasierter Polymerschaum kurzfristig sogar Temperaturen bis 220°C standhält. Zudem weisen diese Haftklebemassen hervorragenden Kälte-Schock-Resistenzen auf, was für viele Anwendungen, z. B. im Bereich des Automobilbaus, von großer Bedeutung ist. Eine besonders wichtige Eigenschaft acrylatbasierter Polymerschäume ist es, dass sie Reißdehnungen von 1000% und mehr aufweisen. Das Bedeutet, dass ein acrylatbasierter Polymerschaum besonders stark gedehnt werden kann ohne zu reißen. Diese Eigenschaft ist besonders Vorteilhaft für die erfindungsgemäße mehrteilige Gehäusedichtung. Durch die große Reißfestigkeit wird es auch ermöglicht, dass unterschiedliche Wärmeausdehnung ungleicher Materialien ausgeglichen werden können. Dadurch können die abzudichtenden Gehäuseelemente aus unterschiedlichen Materialien gefertigt sein die sehr unterschiedliche Temperaturausdehnungskoeffizienten aufweisen. Beispielsweise kann ein Gehäusedeckel aus ABS-Material (Acrylnitril-Butadien-StyrolCopolymer) bestehen und eine Gehäusewanne aus Aluminium. Das Kunststoffmaterial weist einen wesentlich kleineren Temperaturausdehnungskoeffizienten auf im Vergleich zu Aluminium. Zudem weist der acrylatbasierte Polymerschaum hervorragende Alterungsbeständigkeit, Feuchtigkeitsbeständigkeit und Chemikalienbeständigkeit auf, was besonders vorteilhaft für die Zuverlässigkeit und Langlebigkeit der mehrteiligen Gehäusedichtung ist.

Die mehrteilige Gehäusedichtung kann vorteilhaft weitergebildet werden, indem der erste und/oder zweite Klebestreifen eine weitere Haftklebmasseschicht umfasst, wobei die weitere Haftklebmasseschicht auf einer zweiten Seite der Polymerschaumschicht aufgebracht ist, und die zweite Seite der ersten Seite gegenüberliegt. Die weitere Haftklebmasseschicht entspricht vorzugsweise einer der vorgenannten Formulierung der Haftklebmasseschicht.

Besonders bevorzugt ist es, dass die Klebkraft der weiteren Klebmasseschicht, die auf der zweiten Seite der Polymerschaumschicht aufgebracht ist, schwächer ist als die Klebkraft der Haftklebmasseschicht, die auf der ersten Seite der Polymerschaumschicht aufgebracht ist. Mit anderen Worten wird eine Seite der Polymerschaumschicht schwach-klebend ausgeführt. Das soll bedeuten, dass die Adhäsionskraft der schwach-klebend ausgeführten Schicht kleiner ist als die Adhäsionskraft, der Schicht mit der die elastischen Klebstreifen auf ein Gehäuseelement appliziert, also aufgeklebt, wird. Dies kann durch eine auf die Polymerschaumschicht aufgetragene Haftklebmasseschicht erreicht werden, die nur schwach-klebende Eigenschaften aufweist. Zwar haften erstes oder zweites Gehäuseelement dann stärker an der weiteren Klebmasseschicht, allerdings kann dadurch auch die Dichtwirkung zwischen dem ersten und zweiten Gehäuseelement verbessert werden. Dadurch dass die zweite Seite der Polymerschaumschicht eine weitere Klebmasseschicht aufweist, verbessert sich die Dichtwirkung zwischen Gehäuseelement und der Polymerschaumschicht, also beispielsweise auf der Oberseite der Klebestreifen. Gemeint ist hier nicht der erste und zweite Dichtspalt, sondern die senkrecht dazu angeordnete Ober- oder Unterseite des ersten und zweiten Klebestreifens die mit dem Gehäuseelementen in Kontakt stehen. Ist diese eine Seite schwach-klebend ausgeführt kann eine Fluidkommunikation auch an den Kontaktflächen zwischen Gehäuseelement und Klebesteifen (Oberseite, Unterseite der Klebestreifen) zuverlässiger verhindert werden.

Andererseits kann durch die schwach klebende Ausführung einer weiteren Klebmasseschicht sichergestellt werden, dass die mehrteilige Gehäusedichtung beim Lösen und Trennen der Gehäuseelemente voneinander, vollständig an demjenigen Gehäuseelement verbleibt, das mit der Haftklebmasseschicht in Kontakt steht, die die größere Klebkraft aufweist. Weist eine Seite der Klebestreifen eine ausreichend geringe Klebkraft auf, können das erste und zweite Gehäuseelement nachdem sie zusammengefügt wurden wieder getrennt werden, ohne dass dabei die mehrteilige Gehäusedichtung beschädigt oder sogar zerstört wird. Die mehrteilige Gehäusedichtung kann daher wiederverwendet werden, was nachhaltig ist und ein erneutes Applizieren oder Anordnen einer Dichtung überflüssig macht, also Zeit spart. Dadurch wird es ermöglicht ein Gehäuse problemlos wieder zu öffnen um eine Reparatur, einen Austausch oder eine Revision von in dem Gehäuse befindlichen Komponenten durchzuführen.

Die mehrteilige Gehäusedichtung kann vorteilhaft weitergebildet werden, indem dass eine zweite Seite der Polymerschaumschicht, die der ersten Seite gegenüberliegt, eine thermoplastische Folie aufweist oder die thermoplastische Folie auf der weiteren Haftklebmasseschicht aufgebracht ist.

Eine thermoplastische Folie weist keine oder nur sehr gering ausgeprägte Klebeigenschaften auf, so dass sie in jedem denkbaren Aufbau der Klebestreifen, der auf der zweiten Seite der Polymerschaumschicht eine thermoplastische Folie umfasst, eine rückstandsloses und haftkraftfreies Lösen des zweiten bzw. ersten Gehäuseelements möglich ist. Weist eine Seite der Klebestreifen eine sehr geringe oder keine Klebkraft (nicht-klebend) auf, können das erste und zweite Gehäuseelement nachdem sie zusammengefügt wurden wieder getrennt werden, ohne dass dabei die mehrteilige Gehäusedichtung beschädigt oder sogar zerstört wird. Die mehrteilige Gehäusedichtung kann daher wiederverwendet werden, was nachhaltig ist und ein erneutes Applizieren oder Anordnen einer Dichtung überflüssig macht, also Zeit spart. Dadurch wird es ermöglicht ein Gehäuse problemlos wieder zu öffnen um eine Reparatur, einen Austausch oder eine Revision von in dem Gehäuse befindlichen Komponenten durchzuführen.

Bevorzugt umfasst die thermoplastische Folie mindestens ein Polymer ausgewählt aus der Gruppe bestehend aus thermoplastischen Polyolefinen (TPE-E bzw. TPO), insbesondere thermoplastischen Polyolefinelastomeren (POE) und thermoplastischen Polyolefinplastomeren (POP); thermoplastischen Polystyrolelastomeren (TPE-S bzw. TPS), insbesondere Styrolblockcopolymeren (SBC); thermoplastischen Polyurethanelastomeren (TPE-U bzw. TPU); thermoplastischen Polyesterelastomeren und Copolyestern (TPE-E bzw. TPC); thermoplastischen Copolyamiden (TPE-A bzw. TPA); und thermoplastischen Vulkanisaten sowie vernetzten thermoplastischen Polyolefinelastomeren (TPE-V bzw. TPV).

Insbesondere besteht die thermoplastische Folie aus mindestens einem, besonders bevorzugt einem, Polymer ausgewählt aus der Gruppe bestehend aus thermoplastischen Polyolefinen (TPE-E bzw. TPO), insbesondere thermoplastischen Polyolefinelastomeren (POE) und thermoplastischen Polyolefinplastomeren (POP); thermoplastischen Polystyrolelastomeren (TPE-S bzw. TPS), insbesondere Styrolblockcopolymeren (SBC); thermoplastischen Polyurethanelastomeren (TPE-U bzw. TPU); thermoplastischen Polyesterelastomeren und Copolyestern (TPE-E bzw. TPC); thermoplastischen Copolyamiden (TPE-A bzw. TPA); und thermoplastischen Vulkanisaten sowie vernetzten thermoplastischen Polyolefinelastomeren (TPE-V bzw. TPV).

Besonders bevorzugt ist es, dass der erste Klebestreifen und zweite Klebestreifen im Wesentlichen die gleiche Dicke d aufweisen, insbesondere eine Dicke d zwischen 0,1 mm +/- 0,02 mm und 8,0 mm +/- 0,2 mm aufweisen, besonders bevorzugt eine Dicke d zwischen 1,5 mm +/- 0,2 mm und 3,0 mm +/- 0,2 mm aufweisen.

Durch eine gleiche Dicke d des ersten und zweiten Dichtstreifen sind die Kantenflächen, die den ersten und zweiten Dichtspalt ausbilden gleich groß, oder zumindest annährend gleich groß, so dass die Kantenflächen an ihrer Oberseite, also an der Seite der Oberseite des Klebestreifens und an ihrer Unterseite, also an der Seite der Unterseite des Klebestreifens, abschließend angeordnet sind. Es entsteht dann keine Kante oder eine Lücke, da die Höhen der Kantenflächen, die durch die Dicke d der Klebestreifen definiert ist, entsteht. Dies verbessert die Dichtheit der Dichtspalte und die Dichtheit an zwischen Gehäuseelement und erstem und zweitem Klebestreifen.

Ist die Dicke d kleiner als 0,1 mm, kann es passieren, dass die Klebestreifen beim Zusammenpressen zwischen den Gehäuseelementen zu strak gestaucht werden und zerreißen, wodurch die Gehäusedichtung nicht mehr dicht wäre.

Ist die Dicke d größer als 8,0 mm, kann es passieren, dass die Klebestreifen beim Zusammenpressen zwischen den Gehäuseelementen sehr stark expandieren und zwischen den Gehäuseelementen herausquellen.

Besonders bevorzugt ist daher eine Dicke d zwischen 1,5 mm und 3,0 mm. Klebestreifen mit solchen Dicken können ausreichend Kraft beim Zusammenpressen aufnehmen aber quellen auch nicht zwischen Gehäuseelementen heraus.

Die mehrteilige Gehäusedichtung kann vorteilhaft weitergebildet werden, indem der zweite Klebestreifen ein selbstklebendes elastisches Stanzteil ist. Unter einem selbstklebenden elastischen Stanzteil soll ein Klebestreifen verstanden werden, der durch einen Stanzvorgang in eine bestimmte geometrische Form gebracht wird. Die geometrische Form ist vorzugsweise an die Anordnung des ersten und zweiten Endabschnitts des ersten Klebestreifens angepasst. Insbesondere berühren sich die Kantenflächen des ersten und zweiten Endabschnitts des ersten Klebestreifens und des Stanzteils tangential, sodass ein erster und zweiter Dichtspalt ausgebildet werden. Die Eigenschaften und die bevorzugten Schichtaufbauten des Stanzteils entsprechen denen im vorangegangen für die Klebestreifen aufgeführten Eigenschaften und Schichtaufbauten.

Ein Stanzteil kann eine komplexe geometrische Form aufweisen, also ermöglicht so insbesondere andere Formen wie sie bei Klebestreifen, die von einer Klebebandrolle abgetrennt werden möglich sind. So ist es durch die Verwendung eines Stanzteils beispielsweise möglich eine geschlossene Außenkontur der mehrteiligen Gehäusedichtung zu erzeugen. Diese geschlossene Außenkontur kann dann auch eine abschließende Kante mit den Gehäuseelementen bilden.

Bevorzugt ist es, dass wenn das erste Gehäuseelement und das zweite Gehäuseelement mit einer Kraft F gegeneinandergepresst werden die Dicke d des ersten Klebestreifens und des zweiten Klebestreifens um 10% bis 60% verringert wird, besonders bevorzugt um 30% bis 50% verringert wird. Dadurch wird eine ausreichende Expansion des ersten und zweiten Klebestreifens erreicht, sodass der erste und zweite Dichtspalt abgedichtet werden. Zwischen der Verringerung der Dicke d und der Kraft F besteht ein proportionaler Zusammenhang. Je größer die Kraft F ist, die auf das erste und zweite Gehäuseelement wirkt desto stärke wird die Dicke d des ersten und zweiten Klebestreifens verringert. Vorzugsweise wird die Dicke d zwischen 10% und 60% verringert. Dadurch eine mindestens 10%ige Verringerung wird erreicht, dass der Anpressdruck ausreichend groß ist und eine ausreichende Expansion der Klebestreifen erfolgt, sodass der erste und zweite Dichtspalt abgedichtet werden.

Aber die Verringerung der Dicke darf auch nicht zu groß ausfallen, da sonst der erste und zweite Klebestreifen beim Zusammenpressen zwischen den Gehäuseelementen sehr stark expandieren und zwischen den Gehäuseelementen herausquellen können. Zudem kann es zu einer Schädigung der Klebestreifen kommen. Insbesondere kann eine zu starke Kompression, also Verringerung der Dicke d, zu einer Delamination der Polymerschaumschicht von einer Haftklebmasseschicht oder zu einer Delamination der Polymerschaumschicht von der thermoplastischen Folie kommen, wodurch Undichtigkeiten entstehen können.

Eine Verringerung der Dicke d zwischen 30% und 50% ist insbesondere für Klebetreifen, die geschäumte Polymerschaumschichten auf Basis von Acrylaten geeignet. So wird eine gute Dichtwirkung gewährleistet und eine Schädigung des Klebestreifens vermeiden.

Die mehrteilige Gehäusedichtung kann vorteilhaft weitergebildet werden, indem eine Länge I des zweiten Klebestreifen mindestens die Länge l_{A} des Applikationsspalts beträgt zuzüglich einer doppelten Breite b des ersten Klebestreifens, besonders bevorzugt mindestens die Länge l_{A} des Applikationsspalts beträgt zuzüglich der fünffachen Breite b des ersten Klebestreifens. Dadurch werden die in Kontakt stehenden Kantenflächen zwischen erstem und zweitem Klebestreifen in einer Größe erzeugt, die ein zuverlässiges Abdichten gewährleisten.

Die Aufgabe wird in ihrem zweiten Aspekt durch ein Verfahren zum automatisierten Applizieren einer mehrteiligen Gehäusedichtung gelöst.

Das Verfahren umfasst die Schritte
a) Bereitstellen eines ersten Gehäuseelements,
b) Aufbringen eines ersten elastischen Klebestreifens mittels eines robotergeführten Applikationskopfes entlang einer ersten vorbestimmten Kontur auf dem ersten Gehäuseelement durch
   Abfahren der ersten Kontur und gleichzeitiges Abrollen und Andrücken eines Klebestreifenmaterials von einer Klebestreifenrolle
   Abtrennen des Klebestreifenmaterials am Ende der abgefahren ersten Kontur durch den Applikationskopf und
   Ablegen des ersten abgetrennten Klebestreifenmaterials auf dem ersten Gehäuseelement sodass ein Applikationsspalt entsteht, und
   wobei eine erste Stirnseite des ersten abgetrennten Dichtreifenmaterials und eine zweite Stirnseite des ersten abgetrennten Klebestreifenmaterials durch den Applikationskopf gegenüberliegend zueinander und durch den Applikationsspalt voneinander getrennt angeordnet werden, und
c) Aufbringen eines zweiten elastischen Klebestreifens mittels des robotergeführten Applikationskopfes entlang einer zweiten vorbestimmten Kontur auf dem ersten Gehäuseelements durch
   Abfahren der zweiten Kontur und gleichzeitiges Abrollen des Klebestreifenmaterials von der Klebestreifenrolle und Andrücken des Klebestreifenmaterials,
   Abtrennen des Klebestreifenmaterials am Ende der abgefahrenen zweiten Kontur durch den Applikationskopf,
   Ablegen des zweiten abgetrennten Klebestreifenmaterials auf dem ersten Gehäuseelement, und
   wobei das zweite abgetrennte Klebestreifenmaterial so durch den robotergeführten Applikationskopf auf dem ersten Gehäuseelement aufgebracht wird, dass
   eine erste Kantenfläche des zweiten Klebestreifens mit einer ersten Kantenfläche des ersten Klebestreifens in Kontakt steht und einen ersten Dichtspalt bildet, und
   eine zweite Kantenfläche des zweiten Klebestreifens mit einer zweiten Kantenfläche des ersten Klebestreifens in Kontakt steht und einen zweiten Dichtspalt bildet, und
   eine dritte Kantenfläche des zweiten Klebestreifens den Applikationsspalt überdeckt.

Durch die besondere Anordnung der Klebestreifen der mehrteiligen Gehäuseanordnung wird zum einen eine automatisierte Applikation mittels eines robotergeführten Applikationskopfes ermöglicht. Zum anderen wird erst dadurch, dass Gehäusedichtung mehrteilig ausgeführt ist eine Applikation eines Endlosproduktes, durch einen robotergeführten Applikationskopf ermöglicht. Die erfindungsgemäße Anordnung der mehrteiligen Gehäusedichtung hat somit besondere Vorteile in Bezug auf deren Applikation durch ein robotergeführten Applikationskopf.

Die mehrteilige Gehäusedichtung hat die im vorangegangenen aufgeführten Eigenschaften und Vorteile, weshalb diese an dieser Stelle nicht wiederholt werden.

Unter einer Kontur, soll ein vorbestimmter Verfahrweg eines robotergeführten Applikationskopfes verstanden werden. Unter einem Roboter ist jeder mehrachsige, mindestens zweiachsige, Roboter zu verstehen. Im einfachsten Fall handelt es sich um einen Plotter oder einen Portalroboter. Aber auch SCARAS oder fünf- und mehrachsige Industrieroboter sind im Sinne dieser Erfindung unter dem Begriff Roboter zu verstehen.

Unter einem Applikationskopf ist eine Vorrichtung zu verstehen, mit der ein Klebeband von einer Rolle abgerollt werden kann und der abgerollte Teil des Klebebands abgetrennt werden kann. Derartige Applikationsköpfe sind im Stand der Technik bekannt.

Das Verfahren kann vorteilhaft weitergebildet werden, indem erst der erste Klebestreifen auf das erste Gehäuseelement aufgebracht wird und dann der zweite Klebestreifen auf das erste Gehäuseelement aufgebracht wird. Dadurch wird erst der Applikationsspalt durch den ersten Klebestreifen ausgebildet. Der zweite Klebestreifen kann dann präzise an die Kantenflächen des ersten und zweiten Endabschnitts angelegt werden, und der Applikationsspalt verschlossen werden. Dabei kann ein Sensor die exakte Position und/oder Länge des Applikationsspalts ermitteln und den robotergeführten Applikationskopf so führen, dass der zweite Klebestreifen annährend zu gleichen Teilen mit dem ersten und zweiten Endabschnitt des ersten Klebestreifens in Kontakt gebracht wird. Dadurch kann die Dichtwirkung sichergestellt werden.

Das Verfahren kann aber auch so ausgeführt werden, dass zuerst erst der zweite Klebestreifen auf das erste Gehäuseelement aufgebracht wird und dann der erste Klebestreifen aufgebracht wird.

Das Verfahren kann vorteilhaft weitergebildet werden, indem der Applikationskopf vor dem Aufbringen in Schritt c) so bewegt wird, dass ein Teil der Kantenfläche des zweiten Klebestreifens und ein Teil der ersten oder zweiten Kantenfläche des ersten Klebestreifens in Kontakt gebracht werden. Dadurch, dass die Kantenflächen der Klebestreifen bereits in Kontakt stehen, bevor der zweite Klebestreifen auf dem ersten Gehäuseelement abgesetzt wird, kann erreicht werden, dass sich der zweite Klebestreifen beim Ablegen des zweiten abgetrennten Klebestreifenmaterials auf dem ersten Gehäuseelement eng der Kantenfläche des ersten Klebestreifens anschmiegt. Dadurch kann erreicht werden, dass eine Dichtwirkung zuverlässiger erzeugt wird. Der Applikationsprozess der mehrteiligen Gehäusedichtung wird dadurch zuverlässiger und das Risiko von Undichtigkeiten verringert.

Die Anforderung an die Ausrichtung und Positionierung des robotergeführten Applikationskopfes verringern sich dadurch zudem, da sich der zweite Klebestreifen beim ablegen "zurechtschiebt". Wichtig ist jedoch, dass der erste und zweite Klebestreifen in ihrer Längsrichtung überlappen, also nicht etwa einen Abstand voneinander aufweisen, sodass nach dem Ablegen auf dem ersten Gehäuseelement ein Spalt oder eine Lücke zwischen erstem und zweitem Klebestreifen entsteht.

Das Verfahren kann vorteilhaft weitergebildet werden, der zweite Klebestreifen, in Form eines selbstklebenden elastischen Stanzteils bereitgestellt wird und der Applikationskopf dazu ausgebildet ist, dieses Stanzteil auf dem ersten Gehäuseelement zu applizieren, so das eine Kantenfläche des selbstklebenden elastischen Stanzteils mit der ersten und zweiten Kantenfläche des ersten Klebestreifens in Kontakt gebracht wird und ein erster und zweiter Dichtspalt gebildet werden, und eine dritte Kantenfläche des selbstklebenden elastischen Stanzteils den Applikationsspalt überdeckt wird.

Zu den Eigenschaften und Vorteilen zu der Verwendung eines Stanzteils sei auf die vorangehenden Ausführungen verwiesen.

### Testmethoden

Gelpermeationschromatographie zur Bestimmung des Molekulargewichts:
Die Angaben des Molekulargewichts in dieser Schrift beziehen sich auf die Bestimmung per Gelpermeationschromatographie. Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µ, 10³ Ä, ID 8,0 mm 50 mm verwendet. Zur Auftrennung werden die Säulen des Typs PSS-SDV, 5 µ, 10³ Å sowie 10⁵ Å und 10⁶ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt gegen PMMA-Standards (Polymethylmethacrylat-Kalibrierung).

### Dichtheitstest:

Eine erfindungsgemäße mehrteilige Gehäusedichtung wurde gemäß dem erfindungsgemäßen Verfahren auf einer ersten quadratischen Metallplatte (Außenmaße 80 mm x 80 mm x 5 mm) aufgeklebt. Die Klebestreifen wurden dabei so angeordnet, dass Sie eine geschlossene quadratische Kontur in Form eines Quadrats bildeten. Konkret wurde der zweite Klebestreifen außerhalb des durch den ersten Klebestreifen gebildeten Umlaufs angeordnet. Der zweite Klebestreifen überdeckt den Applikationsspalt sodass eine geschlossene Außenkontur entsteht. Dabei traten die ersten und zweiten Kantenflächen des ersten und zweiten Endabschnitts des ersten Klebestreifens mit der ersten und zweiten Kantenfläche des zweiten Klebestreifens in Kontakt. Im Inneren des Quadrats wurde anschließend eine Paste (KMnO₄) aufgetragen, die sich bei Kontakt mit Wasser deutlich Violett verfärbt. Eine identische Metallplatte wurde nun auf den Aufbau aufgelegt und verschraubt. Die Schrauben befanden sich außerhalb des Quadrats aus Klebestreifen, durchstießen also weder das Innere des Quadrats noch die Klebestreifen selbst. Durch 2 Stück je 1 mm starke Passscheiben wurde der Abstand der Metallplatten auf genau 2 mm eingestellt. Mit diesem Aufbau wurde sichergestellt, dass die wasserreaktive Paste in einem geschlossenen Raum (Gehäuseinneren) innerhalb der Klebestreifen ist. Ein Eindringen von Wasser würde durch eine Verfärbung zu erkennen sein und auf Undichtigkeit der mehrteiligen Gehäusedichtung schließen lassen.

Die gesamte Probe wurde nun in ein Wasserbad gegeben, welches dann in einen Autoklav gelegt wurde. Zunächst wurde ein geringer Überdruck von 0,3 bar angelegt; in einer zweiten Prüfung simulierte ein Überdruck von 3 bar dann eine Wassersäule von 30 m. Nach 30-minütiger Lagerung unter Wasser im Autoklav wurde der Überdruck abgelassen, der Verbund entnommen und auf Verfärbung des KMnOa untersucht. Eine Verfärbung indiziert Wasserdurchlässigkeit der mehrteiligen Gehäusedichtung, keine Verfärbung indiziert Dichtheit gegen Wasser (Ergebnis "wasserdurchlässig Ja/Nein").

Wiederablösbarkeit des verklebten Substrats (Simulation der Wiederablösung eines verklebten Batteriedeckels; reopenability):
Die mehrteilige Gehäusedichtung wurde mit einer stärker klebenden Seite der Klebestreifen (Unterseite der Klebestreifen) auf eine Aluminiumplatte (450 x 250 mm, 2,5 mm Dicke) in einem Abstand zum Plattenrand von 30 mm einmal umlaufend aufgebracht mit Ausnahme des Applikationsspalts. Dabei wurde ein Applikationsspalt mit einer Länge l_{A} von 5 mm vorgesehen. Auf die Oberseite der Klebestreifen wurde eine weitere Aluminiumplatte (450 x 250 mm, 1 mm Dicke) mit identischen Abmessungen aufgebracht. Durch 2 Stück je 1 mm starke Passscheiben wurde der Abstand der Metallplatten auf genau 2 mm eingestellt und bildet eine Fuge. Anschließend wurde der Verbund mittels einer Schraubzwinge zusammengepresst. Die Aluminiumplatten wurden danach miteinander verschraubt, indem in den Ecken der Platten zu diesem Zweck vorhandene Löcher genutzt wurden.

Der so entstandene Verbund wurde für 10 Tage in einer Klimakammer bei 40°C und 100% relativer Luftfeuchte gelagert. Nach der Entnahme wurde er für 24 h bei 23°C und 50% relativer Feuchte rekonditioniert.

Anschließend wurden die Schrauben und Passscheiben entfernt und auf einer der kürzeren Seiten ein Spanngurt in die Fuge eingebracht, der mit einer Prüfmaschine (Zwick) verbunden war. Die obere (1 mm dicke) Platte wurde mit einer Geschwindigkeit von 300 mm/min in einem Winkel von 90° von der mehrteiligen Gehäusedichtung abgezogen, die dazu benötigte Maximalkraft wurde gemessen. In Tabelle 1 ist der Mittelwert aus drei Messungen angegeben.

Die Klebestreifen wurden durch Ablängen von den folgenden Klebebändern bereitgestellt:
A - tesa^{®} 61102 (geschlossenzelliger EPDM-Kautschuk-Schaum, einseitig mit einer Acrylat-Klebmasse beschichtet, Gesamtdicke 3.200 µm; tesa)
B - tesa^{®} ACX^{plus} 70730 High Resistance (doppelseitiges Acrylat-Schaumtape, beidseitig mit Acrylat-Haftklebmasse beschichtet, Gesamtdicke 2.900 µm; tesa), einseitig mit einer thermoplastischen Polyurethanfolie (Platilon^{®} U04/PE, 30 µm; Bayer) laminiert
C - tesa^{®} ACX^{plus} 70730 High Resistance, wobei die Acrylat-Haftklebmasse nur einseitig aufgebracht war, auf einer Seite also der Acrylatschaum freilag (siehe B, Gesamtdicke 2.850 µm; tesa)
D - tesa^{®} 92111 HiP - High initial Performance, 3x auf sich selbst verklebt, Gesamtdicke 3.300 µm; tesa); einseitig mit einer thermoplastischen Polyurethanfolie (Platilon^{®} U04/PE, 30 µm; Bayer) laminiert
E - tesa^{®} ACX^{plus} 70730 High Resistance (doppelseitiges Acrylat-Schaumtape, beidseitig mit Acrylat-Haftklebmasse beschichtet, Gesamtdicke 2.900 µm; tesa); Vergleichsbeispiel

**Tabelle 1: Testergebnisse**

| Klebestreifen aus Klebeband | Wasserdurchlässigkeit bei 0,3 bar | Wasserdurchlässigkeit bei 3 bar | Wiederablösbarkeit |
|---|---|---|---|
| A | Nein | Ja | |
| B | Nein | Nein | Messung nicht benötigt, die Verklebung ließ sich sehr einfach von Hand lösen |
| C | Nein | Nein | 148 N |
| D | Nein | Nein | Messung nicht benötigt, die Verklebung ließ sich sehr einfach von Hand lösen |
| E (Vgl.) | Nein | Nein | > 500 N |

| | | | |
|---|---|---|---|
| Vgl. = Vergleichsbeispiel | | | |

Die Erfindung wird anhand verschiedener Ausführungsbeispiele in neun Figuren beschrieben. Dabei zeigen:
- Fig. 1: Schematische Darstellung der mehrteiligen Gehäusedichtung
- Fig. 2 a) - d): Schnitte durch die mehrteilige Gehäusedichtung
- Fig. 3: Definition der Seiten und Richtungen eines Klebestreifen
- Fig. 4: Definition der Seiten und Richtungen eines Klebestreifen
- Fig. 5: Schichtaufbau der elastischen Klebestreifen gemäß einer ersten Variante
- Fig. 6: Schichtaufbau der elastischen Klebestreifen gemäß einer zweiten Variante
- Fig. 7: Schichtaufbau der elastischen Klebestreifen gemäß einer dritten Variante
- Fig. 8 a) - d): Varianten der Anordnung der mehrteiligen Gehäusedichtung
- Fig. 9: Beispielhafte Darstellung eines Gehäuses mit mehrteiliger Gehäusedichtung

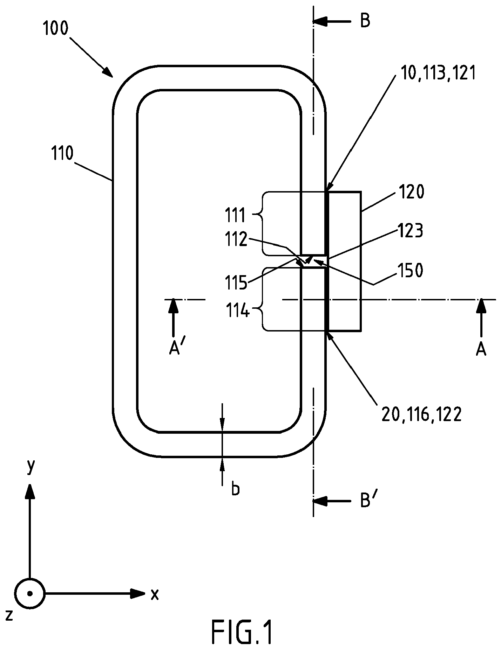

Figur 1 stellt schematisch eine Draufsicht auf die Anordnung der erfindungsgemäßen Gehäusedichtung 100 dar. Ein erster Klebestreifen 110 ist auf einem ersten Gehäuseelement 1 (nicht dargestellt) aufgeklebt. Dabei bildet der erste Klebestreifen einen nahezu geschlossenen Umlauf auf. Der Umlauf ist nicht vollständig geschlossen, sondern durch den Applikationsspalt 150 unterbrochen. Die erste und zweite Stirnseite 112 und 115 des ersten Klebestreifens 110 sind so angeordnet, dass sie sich gegenüberliegen, sich aber nicht berühren, wodurch der Applikationsspalt 150 gebildet wird. Durch den Applikationsspalt 150 lässt sich der erste elastische Klebestreifen 110 leichter durch einen robotergeführten Applikationskopf auf dem Gehäuseelement 1 (nicht dargestellt) aufbringen. Der Applikationsspalt 150 ist seitlich durch die dritte Kantenfläche 123 des zweiten Klebestreifens 120 abgedeckt, also verschlossen. Der erste und zweite Klebestreifen 110, 120 liegen in derselben Ebene. In einem ersten Endabschnitt 111 stehen der erste Klebestreifen 110 und der zweite Klebestreifen 120 über die erste Kantenfläche 113 des ersten Klebestreifens 110 und die erste Kantenfläche 121 des zweiten Klebestreifens 120 in Kontakt und bilden den ersten Dichtspalt 10. In einem zweiten Endabschnitt 114 stehen der erste Klebestreifen 110 und der zweite Klebestreifen 120 über die zweite Kantenfläche 116 des ersten Klebestreifens 110 und die zweite Kantenfläche 122 des zweiten Klebestreifens 120 in Kontakt und bilden den zweiten Dichtspalt 20.

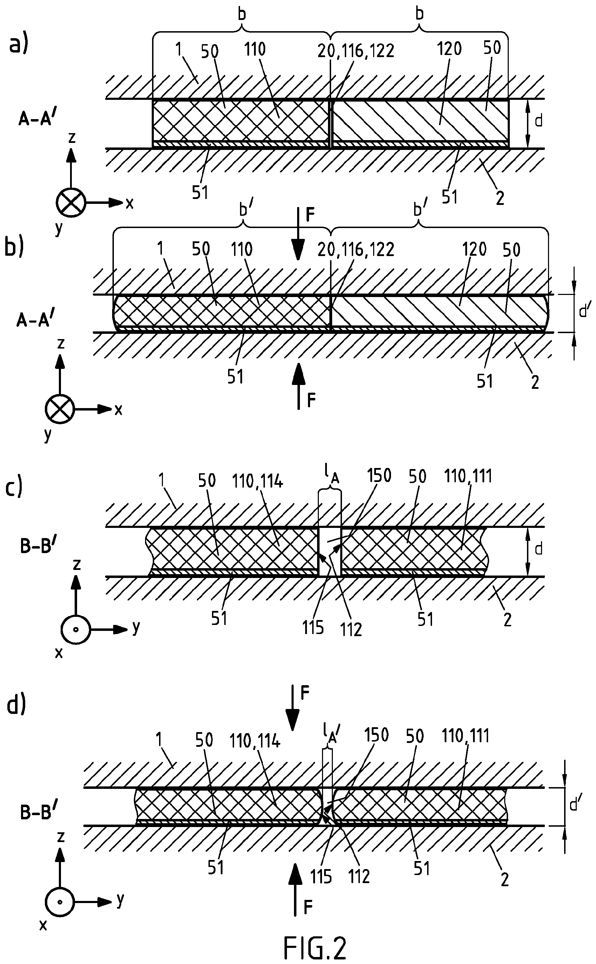

Figur 2 stellt zwei Schnitte durch die mehrteilige Gehäusedichtung dar. Die Schnitte liegen in der Ebene AA' - Figuren 2 a) und b) und in der Ebene BB' - Figur 2 c) und d). Die Schnittebenen sind auch in der Figur 1 eingezeichnet.

In Figur 2 a) ist ein Schnitt in der Schnittebene AA' durch den ersten elastische Klebestreifen 110 und den zweiten elastischen Klebestreifen 120 im Bereich des zweiten Endabschnitts 114 dargestellt. Dabei sind der erste und zweite Klebestreifen 110, 120 mittels der Haftklebmasseschicht 51 auf dem ersten Gehäuseelement 1 aufgeklebt. Die Figur 2 a) zeigt die mehrteilige Gehäusedichtung, also nach einem Applikationsvorgang durch einen Applikationskopf. Zudem ist das zweite Gehäuseelement 2 auf die Oberseite des ersten und zweiten Klebstreifens aufgelegt. Die Oberseite der Klebstreifen wird in dieser Ausführung durch die Oberseite der Polymerschaumschicht 50 der Klebestreifen 110, 120 gebildet. Der erste und zweite elastische Klebestreifen 110, 120 stehen über die Kantenfläche 116 und 122 miteinander in Kontakt oder diese Flächen liegen zumindest gegenüber und berühren sich nicht oder nur teilweise. Zwischen den Kantenflächen 116 und 122 wird der zweite Dichtspalt 20 ausgebildet. Das erste und zweite Gehäuseelement 1, 2 sind durch die Dicke d des ersten und zweiten Klebestreifens voneinander beabstandet.

Auf eine Darstellung einer Schnittebene durch den ersten Endabschnitt 111 und die Kantenflächen 113, 121 sowie den Dichtspalt 10 wird an dieser Stelle verzichtet, da dort die gleichen Gegebenheiten vorliegen und die Darstellung der Figur 2 a) mit den entsprechenden Anpassungen ebenso für diesen Schnitt gilt.

In Figur 2 b) ist dieselbe Schnittebene AA' wie in Figur 2 a) dargestellt, mit dem Unterschied, dass eine Kraft F auf die Gehäuseelemente 1 und 2 einwirkt. Dadurch werden der erste und zweite elastische Klebestreifen 110 und 120 gestaucht und der Abstand der Gehäuseelemente 1 und 2 verringert sich auf den Abstand d' (d > d`). Insbesondere wird die Polymerschaumschicht 50 des ersten und zweiten Klebestreifens komprimiert und dessen Material gestaucht. Durch die Krafteinwirkung mit der Kraft F expandieren die Polymerschaumschichten 50 des ersten und zweiten elastischen Klebestreifens 110, 120 in Richtung der Kantenflächen. Dies ist durch die Wölbung der Kantenflächen angedeutet. Die erste und zweite Kantenfläche 116, 122 können nicht oder kaum expandieren oder sich aufwölben, da diese Kantenflächen bereits in Kontakt stehen. Vielmehr wirkt durch die Expansion eine Kraft und eine Gegenkraft auf die erste und zweite Kantenfläche 116, 122, wodurch die erste und zweite Kantenfläche 116, 122 gegeneinandergepresst werden und den Dichtspalt 20 abdichten.

Auf eine Darstellung einer Schnittebene durch den ersten Endabschnitt 111 und die Kantenflächen 113, 121 sowie den Dichtspalt 10 wird an dieser Stelle verzichtet, da dort die gleichen Gegebenheiten vorliegen und die Darstellung der Figur 2 b) mit den entsprechenden Anpassungen ebenso für diesen Schnitt gilt.

In Figur 2 c) ist ein Schnitt in der Schnittebene BB` durch den ersten und zweiten Endabschnitt 111, 114 des ersten elastische Klebestreifens 110 dargestellt. Der erste Klebestreifen 110 ist mittels der Haftklebmasseschicht 51 auf dem ersten Gehäuseelement 1 aufgeklebt. Die Figur 2 c) zeigt die mehrteilige Gehäusedichtung also nach einem Applikationsvorgang. Zudem ist das zweite Gehäuseelement 2 auf die Oberseite des ersten elastischen Klebstreifens aufgelegt. Die Oberseite wird in dieser Ausführung des Klebstreifens durch die Oberseite der Polymerschaumschicht 50 des Klebestreifens gebildet. Zwischen dem ersten und zweiten Endabschnitt 111, 114 des ersten elastische Klebestreifens 110 ist der Applikationspalt 150 ausgebildet. Der Applikationsspalt hat die Länge l_{A}. Das erste und zweite Gehäuseelement 1, 2 sind durch die Dicke d des ersten und zweiten Klebestreifens (nicht dargestellt) voneinander beabstandet.

In Figur 2 d) ist dieselbe Schnittebene BB` wie in Figur 2 c) dargestellt, mit dem Unterschied, dass eine Kraft F auf die Gehäuseelemente 1 und 2 einwirkt. Dadurch wird der erste elastische Klebestreifen 110 gestaucht und der Abstand der Gehäuseelemente 1 und 2 verringert sich auf den Abstand d' (d > d`). Insbesondere wird die Polymerschaumschicht 50 des ersten elastischen Klebestreifens 110 komprimiert und dessen Material gestaucht. Durch die Krafteinwirkung mit der Kraft F expandiert die Polymerschaumschicht 50 des ersten elastischen Klebestreifens 110 in Richtung der Kantenflächen. Dies ist durch die Wölbung der ersten Stirnseite 112 und der zweiten Stirnseite 115 im Applikationsspalt 150 angedeutet. Die Stirnseiten sind ebenfalls Kantenflächen. Dadurch verringert sich die Länge des Applikationsspalts auf die Länge l_{A}' (l_{A} > l_{A}'). In der Figur 2 d) berühren sich die erste und zweite Stirnseite 112 und 115 nach der Stauchung des ersten Klebestreifens nicht (l_{A} ≠ 0). Es ist aber ebenso möglich, dass der erste elastische Klebestreifen so stark expandiert, dass die Stirnseiten 112 und 115 in Kontakt treten und einen dritten Dichtspalt bilden und diesen abdichten. Dafür muss der Applikationsspalt 150 klein sein und in etwa der Expansion entsprechen, die der erste elastische Klebestreifen 110 unter Krafteinwirkung erfährt.

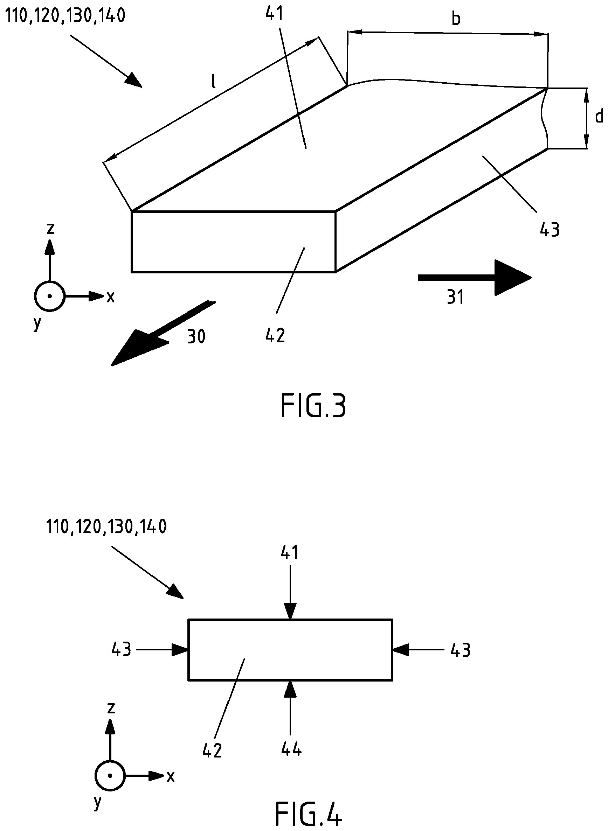

In Figur 3 sind die Seiten und Richtungen eines erfindungsgemäßen Klebestreifens 110, 120, 130 und das selbstklebende elastische Stanzteil 140 dargestellt. Die Oberseite 41 der Klebestreifen ist im Wesentlichen senkrecht zu der Stirnseite 42 und der Kantenflächen 43 angeordnet. Die Längsrichtung der Klebestreifen erstreckt sich in Richtung der Länge I der Klebestreifen und ist senkrecht zu der Querrichtung 31 der Klebestreifen. Teile der Kantenflächen 43 bilden die Dichtspalte 10 und 20 (nicht dargestellt), wenn die elastischen Klebestreifen in Richtung der Querrichtung expandieren wenn die Klebestreifen gestaucht werden. Die Klebestreifen weisen die Dicke d, die Breite b und die Länge I auf.

Figur 4 stellt eine stirnseitige Draufsicht auf die Stirnseite 42, 112, 115 eines Klebestreifens dar. Die Stirnseiten eines Klebestreifens werden durch das Abtrennen von einem Klebeband erzeugt. Die Unterseite 44 ist der Oberseite 41 gegenüberliegend angeordnet.

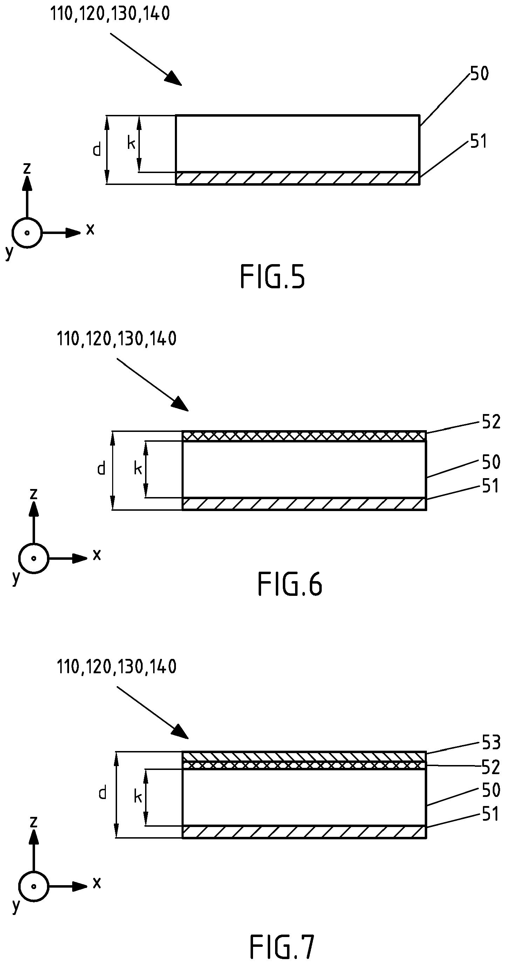

Figur 5 stellt einen ersten bevorzugten Schichtaufbau eines elastischen Klebestreifens 110 120, 130 oder eines selbstklebenden elastischen Stanzteils 140 dar. Die Polymerschaumschicht 50 weist auf der Unterseite eine Haftklebmasseschicht 51 auf. Die Polymerschamschicht hat die Dicke k und der gesamte Klebestreifen bzw. das selbstklebende elastische Stanzteil die Dicke d.

Figur 6 stellt einen zweiten bevorzugten Schichtaufbau eines elastischen Klebestreifens 110 120, 130 oder eines selbstklebenden elastischen Stanzteils 140 dar. Die Polymerschaumschicht 50 weist wie in Figur 5 auf der Unterseite eine Haftklebmasseschicht 51 auf. Auf der Oberseite, also der, der ersten Seite der Polymerschaumschicht gegenüberliegenden zweiten Seite, ist eine weitere Haftklebmasseschicht 52 vorgesehen. Die Klebkraft der weiteren Haftklebmasseschicht 52 ist geringer als die Klebkraft der Haftklebmasseschicht 51. Die Polymerschamschicht 50 hat die Dicke k und der gesamte Klebestreifen 110, 120, 130 respektive das selbstklebende elastische Stanzteil 140 die Dicke d. Bei dieser zweiten Variante wird also eine mehrteilige Gehäusedichtung 100 bei der die Klebkräfte asymmetrisch auf der Oberseite und der Unterseite der Klebestreifen 110, 120 sind.

Figur 7 stellt einen dritten bevorzugten Schichtaufbau eines elastischen Klebestreifens 110 120, 130 oder eines selbstklebenden elastischen Stanzteils 140 dar. Die Polymerschaumschicht 50 weist wie in Figur 5 und 6 auf der Unterseite eine Haftklebmasseschicht 51 auf. Auf der Oberseite, also der, der ersten Seite der Polymerschaumschicht gegenüberliegenden zweiten Seite, ist eine weitere Haftklebmasseschicht 52 vorgesehen. Die Klebkraft der weitern Haftklebmasseschicht 52 kann geringer, gleich oder größer als die Klebkraft der Haftklebmasseschicht 51 sein. Auf der weiteren Haftklebmasseschicht 52 ist eine thermoplastische Folie 53 aufgebracht. Die Polymerschamschicht hat die Dicke k und der gesamte Klebestreifen respektive das selbstklebende elastische Stanzteil die Dicke d. Bei dieser dritten Variante wird also eine mehrteilige Gehäusedichtung 100 mit einseitig nicht-klebenden Eigenschaften erzeugt.

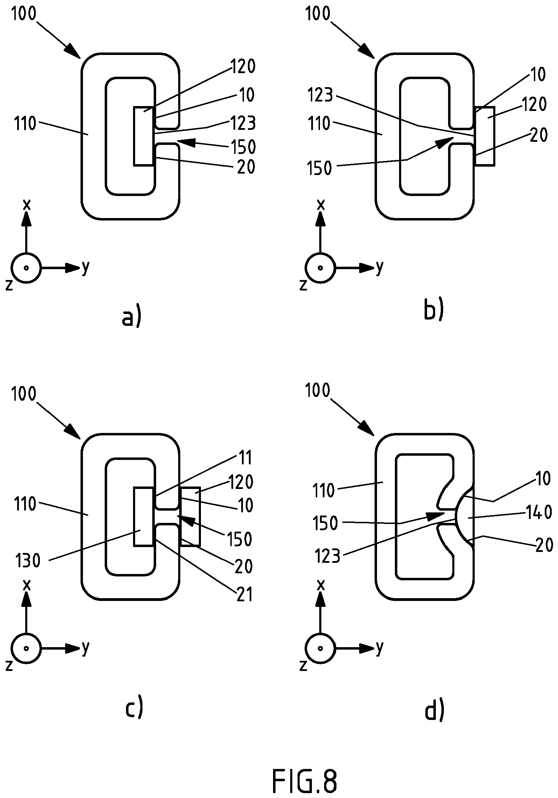

Die Figuren 8 a) bis d) stellen schematisch vier bevorzugte Varianten der mehrteiligen Gehäusedichtung 100 dar. Der Verlauf des ersten Klebestreifens 110 ist dabei exemplarisch gewählt und soll keinesfalls beschränkend gewertet werden. Der tatsächliche Verlauf, also die Kontur auf der der erste Klebestreifen aufgebracht wird, kann beleibeige andere Verläufe beschreiben. Lediglich die Stirnseiten des ersten Klebestreifens sollen im Wesentlichen gegenüberliegend angeordnet sein.

Die Figuren 8 a) und b) stellen jeweils erfindungsgemäße mehrteilige Gehäusedichtungen dar, wobei in Figur 8 a) der zweite Klebestreifen innerhalb des durch den ersten Klebestreifen gebildeten Umlaufs angeordnet ist. Das bedeutet, dass der zweite elastische Klebestreifen nur über die dritte Kantenfläche 123 mit dem Äußeren des Gehäuses in Fluidkommunikation steht. Diese Anordnung hat den Vorteil, dass eine gerade umlaufende Außenkante vorliegt, die nur durch den Applikationspalt 150 unterbrochen ist. Der zweite Klebestreifen 120 dichtet den Applikationsspalt 150, der durch das beabstandete Ablegen der Endabschnitte des ersten Klebestreifens 110 gebildeten wird, "von innen" ab (Gehäuseinneren). Wirkt die Kraft F auf das erste und zweite Gehäuseelement 1, 2 (nicht dargestellt) ein, werden der erste und zweite Dichtspalt 10, 20 abgedichtet.

In Figur 8 b) ist eine mehrteilige Gehäusedichtung 100 dargestellt bei der der zweite Klebestreifen 120 außerhalb des durch den ersten Klebestreifen 110 gebildeten Umlaufs angeordnet ist und der Applikationsspalt 150 "von außen" abgedichtet ist (Gehäuseäußeren). Wirkt die Kraft F auf das erste und zweite Gehäuseelement 1, 2 (nicht dargestellt) ein, werden der erste und zweite Dichtspalt 10, 20 abgedichtet.

Figur 8 c) stellt eine Kombination der Varianten aus den Figuren 8 a) und 8 b) dar. Ausgehend von Figur 8 b) kann ein weiterer elastischer Klebestreifen 130 (dritter elastischer Klebestreifen) innerhalb des durch den ersten Klebestreifen gebildeten Umlaufs angeordnet sein. Diese Anordnung lässt sich ebenso gut automatisiert mit dem erfindungsgemäßen Verfahren auf einem Gehäuseelement (nicht dargestellt) aufbringen. Der dritte Klebestreifen hat dabei vorzugsweise eine ähnliche Länge, wie der zweite Klebestreifen. Der Vorteil dieses Aufbaus der mehrteiligen Gehäusedichtung 100 besteht darin, dass zwei weitere Dichtspalte entstehen - dritter Dichtspalt 11 und vierter Dichtspalt 21 - und der Applikationsspalt zusätzlich auch "von innen" abgedichtet wird (Gehäuseinneren). Wirkt die Kraft F auf das erste und zweite Gehäuseelement 1, 2 (nicht dargestellt) ein, werden der erste, zweite, dritte und vierte Dichtspalt 10, 20, 11, 21 abgedichtet. Durch die zusätzlichen Dichtspalte 11, 21 kann die Abdichtung zuverlässiger werden.

In Figur 8 d) ist eine mehrteilige Gehäusedichtung 100 dargestellt bei der abweichend zu Figur 8 b) oder 8 c) der zweite Klebestreifen 120 durch ein selbstklebendes elastisches Stanzteil gebildet wird. Die Formgebung ist rein exemplarisch und soll die erfinderischen Gedanken nicht einschränken. Das selbstklebende elastische Stanzteil 140 ist außerhalb des durch den ersten Klebestreifen 110 gebildeten Umlaufs angeordnet und der Applikationsspalt 150 wird durch das Stanzteil 140 "von außen" abgedichtet (Gehäuseäußeren). Der erste und zweite Dichtspalt 10, 20 werden unter Krafteinwirkung F auf das erste und zweite Gehäuseelement 1 und 2 abgedichtet. Der Vorteil eines Stanzteils besteht darin, dass dieses in einer vorbestimmten Form bereitgestellt werden kann. Das Stanzteil ist in präzise schneidenden Fertigungsmaschinen gefertigt und weist daher gelichmäßig ebene Kantenflächen auf, sodass eine gute Dichtwirkung erreicht werden kann. Diese Anordnung hat den Vorteil, dass eine gerade umlaufende Außenkante vorliegt, die auch nicht durch den Applikationspalt 150 unterbrochen ist (vgl. Fig. 1).

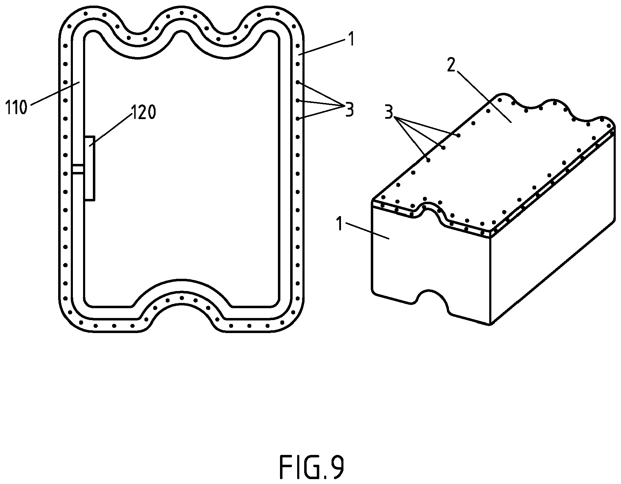

In Figur 9 ist exemplarisch eine Anwendung der mehrteiligen Gehäusedichtung 100 dargestellt. Der erste und zweite elastische Klebestreifen 110 und 120 sind erfindungsgemäß auf einem ersten Gehäuseelement 1 aufgebracht. Das erste Gehäuseelement 1 ist hier eine Gehäusewanne. Das zweite Gehäuseelement 2 ist ein Deckel, der mittels Verbindungselementen 3, z. B. Schrauben, Spangen oder Nieten, mit der Gehäusewanne verbunden wird, wodurch die Kraft F auf die mehrteilige Gehäusedichtung 100 wirkt und der erste und zweite Klebestreifen 110, 120 gestaucht werden. Solch ein Gehäuse kann beispielsweise ein Schutzgehäuse für Batteriemodule sein.

### Bezugszeichenliste

- 1: erstes Gehäuseelement
- 2: zweites Gehäuseelement
- 3: Verbindungselemente
- 10: erster Dichtspalt
- 11: dritter Dichtspalt
- 20: zweiter Dichtspalt
- 21: vierter Dichtspalt
- 30: Längsrichtung
- 31: Querrichtung
- 41: Oberseite
- 42: Stirnseite
- 43: Kantenfläche
- 44: Unterseite
- 50: Polymerschaumschicht
- 51: Haftklebmasseschicht
- 52: weitere Haftklebmasseschicht (schwach-klebende Schicht)
- 53: thermoplastische Folie
- 100: mehrteilige Gehäusedichtung
- 110: erster elastischer Klebestreifen
- 111: erster Endabschnitt
- 112: erste Stirnseite
- 113: erste Kantenfläche (erster Klebestreifen)
- 114: zweiter Endabschnitt
- 115: zweite Stirnseite
- 116: zweite Kantenfläche (erster Klebestreifen)
- 120: zweiter elastischer Klebestreifen
- 121: erste Kantenfläche (zweiter Klebestreifen)
- 122: zweite Kantenfläche (zweiter Klebestreifen)
- 123: dritte Kantenfläche (zweiter Klebestreifen)
- 130: dritter elastischer Klebestreifen
- 140: selbstklebendes elastisches Stanzteil
- 150: Applikationsspalt

## Patentansprüche

1. Gehäuse umfassend
- ein erstes Gehäuseelement (1),
- ein zweites Gehäuseelement (2), und
- eine zwischen dem ersten Gehäuseelement und dem zweiten Gehäuseelement angeordnete mehrteilige Gehäusedichtung (100) zur Abdichtung des Gehäuseinneren gegenüber dem Gehäuseäußeren,
umfassend einen
ersten elastischen Klebestreifen (110) und einen zweiten elastischen Klebestreifen (120, 130), wobei der erste und zweite Klebestreifen (110, 120, 130) zwischen dem ersten Gehäuseelement und dem zweiten Gehäuseelement angeordnet sind,
**dadurch gekennzeichnet, dass**
- der erste Klebestreifen (110) einen ersten Endabschnitt (111) mit einer ersten Stirnseite (112) und einer ersten Kantenfläche (113) und einen zweiten Endabschnitt (114) mit einer zweiten Stirnseite (115) und einer zweiten Kantenfläche (116) umfasst, und derart zwischen dem ersten Gehäuseelement und dem zweiten Gehäuseelement angeordnet ist, dass
∘ die erste Stirnseite (112) und die zweite Stirnseite (115) gegenüberliegend zueinander und durch einen Applikationsspalt (150) voneinander getrennt angeordnet sind, und
∘ die erste und zweite Kantenfläche (113, 116) im Wesentlichen in einer Ebene liegen, und
∘ wobei der erste Klebestreifen (110) zwischen dem ersten Gehäuseelement und dem zweiten Gehäuseelement, mit Ausnahme des Applikationsspalts (150), in einem geschlossenen Umlauf angeordnet ist, und
- der zweite Klebestreifen (120, 130) derart zwischen dem ersten Gehäuseelement und dem zweiten Gehäuseelement angeordnet ist, dass
∘ eine erste Kantenfläche (121) des zweiten Klebestreifens (120) mit der ersten Kantenfläche (113) des ersten Klebestreifens (110) in Kontakt steht und einen ersten Dichtspalt (10) bildet, und
∘ eine zweite Kantenfläche (122) des zweiten Klebestreifens (120) mit der zweiten Kantenfläche (116) des ersten Klebestreifens (110) in Kontakt steht und einen zweiten Dichtspalt (20) bildet, und
o eine dritte Kantenfläche (123) des zweiten Klebestreifens (120) den Applikationsspalt (150) überdeckt, sodass,
wenn
das erste Gehäuseelement und das zweite Gehäuseelement mit einer Kraft F gegeneinandergepresst werden, der erste elastische Klebestreifen (110) und der zweite elastische Klebestreifen (120) gestaucht werden und diese in Richtung der Kantenflächen (113, 121, 116, 122) expandieren, wodurch
die erste Kantenfläche (121) des zweiten Klebestreifens (120) und die erste Kantenfläche (113) des ersten Klebestreifens (110) gegeneinander gepresst werden und den ersten Dichtspalt (10) abdichten, und
die zweite Kantenfläche (122) des zweiten Klebestreifens (120) und die zweite Kantenfläche (116) des ersten Klebestreifens (110) gegeneinander gepresst werden und den zweiten Dichtspalt (20) abdichten, wodurch
eine Fluidkommunikation zwischen dem Gehäuseinneren und dem Gehäuseäußeren unterbunden wird.

2. Gehäuse nach Anspruch 1,
**dadurch gekennzeichnet, dass** der zweite Klebestreifen (120) derart gegenüber dem ersten Klebestreifen (110) angeordnet ist, dass eine Längsrichtung (30) des zweiten Klebestreifen (120)
- parallel zu einer Längsrichtung (30) des ersten Endabschnitts (111) verläuft, und
- parallel zu einer Längsrichtung (30) des zweiten Endabschnitts (114) verläuft.

3. Gehäuse nach Anspruch 1 oder 2, **dadurch gekennzeichnet, dass** der erste und/oder zweite Klebestreifen (110, 120) eine Polymerschaumschicht (50) umfasst und eine erste Seite (44) der Polymerschaumschicht (50) eine Haftklebmasseschicht (51) aufweist.

4. Gehäuse nach Anspruch 3, **dadurch gekennzeichnet, dass** die Polymerschaumschicht (50) selbst eine Haftklebmasse ist, insbesondere ein haftklebriger acrylatbasierter Polymerschaum ist.

5. Gehäuse nach Anspruch 3 oder 4, **dadurch gekennzeichnet, dass** der erste und/oder zweite Klebestreifen (110, 120) eine weitere Haftklebmasseschicht (52) umfasst, wobei die weitere Haftklebmasseschicht (52) auf einer zweiten Seite (41) der Polymerschaumschicht (50) aufgebracht ist, und die zweite Seite (41) der ersten Seite (44) gegenüberliegt.

6. Gehäuse nach einem der Ansprüche Anspruch 3 bis 5, **dadurch gekennzeichnet, dass** eine zweite Seite (41) der Polymerschaumschicht (50), die der ersten Seite (44) gegenüberliegt, eine thermoplastische Folie (53) aufweist oder die thermoplastische Folie (53) auf der weiteren Haftklebmasseschicht (52) aufgebracht ist.

7. Gehäuse nach einem der vorhergehenden Ansprüche, **dadurch gekennzeichnet, dass** der erste Klebestreifen (110) und zweite Klebestreifen (120) im Wesentlichen die gleiche Dicke d aufweisen, insbesondere eine Dicke d zwischen 0,1 mm +/- 0,02 mm und 8,0 mm +/- 0,2 mm aufweisen, besonders bevorzugt eine Dicke d zwischen 1,5 mm +/- 0,2 mm und 3,0 mm +/- 0,2 mm aufweisen.

8. Gehäuse nach einem der vorhergehenden Ansprüche, **dadurch gekennzeichnet, dass** der erste Klebestreifen (110) und/oder der zweite Klebestreifen (120) Klebebänder sind, insbesondere, dass der erste und zweite Klebestreifen im Wesentlichen aus einer selbstklebenden Klebmasse bestehen, insbesondere im Wesentlichen aus einer acrylatbasierten Klebmasse bestehen.

9. Gehäuse nach einem der vorhergehenden Ansprüche, **dadurch gekennzeichnet, dass** der zweite Klebestreifen (120) ein selbstklebendes elastisches Stanzteil (140) ist.

10. Gehäuse nach einem der vorhergehenden Ansprüche, **dadurch gekennzeichnet, dass**, wenn das erste Gehäuseelement (1) und das zweite Gehäuseelement (2) mit einer Kraft F gegeneinandergepresst werden, die Dicke d des ersten Klebestreifens (110) und des zweiten Klebestreifens (120) um 10% bis 60% verringert wird, besonders bevorzugt um 30% bis 50% verringert wird.

11. Gehäuse nach einem der vorhergehenden Ansprüche, **dadurch gekennzeichnet, dass** eine Länge I des zweiten Klebestreifen (120) mindestens die Länge l_{A} des Applikationsspalts (150) beträgt zuzüglich einer doppelten Breite b des ersten Klebestreifens (110), besonders bevorzugt mindestens die Länge l_{A} des Applikationsspalts (150) beträgt zuzüglich der fünffachen Breite b des ersten Klebestreifens (110).

12. Verfahren zum automatisierten Applizieren einer mehrteiligen Gehäusedichtung (100) in einem Gehäuse gemäß einem der Ansprüche 1- 11, umfassend die Schritte
a) Bereitstellen des ersten Gehäuseelements (1),
b) Aufbringen des ersten elastischen Klebestreifens (110) mittels eines robotergeführten Applikationskopfes entlang einer ersten vorbestimmten Kontur auf dem ersten Gehäuseelement (1) durch
- Abfahren der ersten Kontur und gleichzeitiges Abrollen und Andrücken eines Klebestreifenmaterials von einer Klebestreifenrolle,
- Abtrennen des Klebestreifenmaterials am Ende der abgefahren ersten Kontur durch den Applikationskopf, und
- Ablegen des ersten abgetrennten Klebestreifenmaterials auf dem ersten Gehäuseelement sodass ein Applikationsspalt (150) entsteht, und
wobei eine erste Stirnseite (112) des ersten abgetrennten Dichtreifenmaterials und eine zweite Stirnseite (115) des ersten abgetrennten Klebestreifenmaterials durch den Applikationskopf gegenüberliegend zueinander und durch den Applikationsspalt (150) voneinander getrennt angeordnet werden, und
c) Aufbringen des zweiten elastischen Klebestreifens (120) mittels des robotergeführten Applikationskopfes entlang einer zweiten vorbestimmten Kontur auf dem ersten Gehäuseelements (1) durch
- Abfahren der zweiten Kontur und gleichzeitiges Abrollen des Klebestreifenmaterials von der Klebestreifenrolle und Andrücken des Klebestreifenmaterials,
- Abtrennen des Klebestreifenmaterials am Ende der abgefahrenen zweiten Kontur durch den Applikationskopf,
- Ablegen des zweiten abgetrennten Klebestreifenmaterials auf dem ersten Gehäuseelement (1), und
wobei das zweite abgetrennte Klebestreifenmaterial so durch den robotergeführten Applikationskopf auf dem ersten Gehäuseelement (1) aufgebracht wird, dass
- eine erste Kantenfläche (121) des zweiten Klebestreifens (120) mit einer ersten Kantenfläche (113) des ersten Klebestreifens (110) in Kontakt steht und einen ersten Dichtspalt (10) bildet, und
- eine zweite Kantenfläche (122) des zweiten Klebestreifens (120) mit einer zweiten Kantenfläche (116) des ersten Klebestreifens (110) in Kontakt steht und einen zweiten Dichtspalt (20) bildet, und
- eine dritte Kantenfläche (123) des zweiten Klebestreifens (120) den Applikationsspalt (150) überdeckt.

13. Verfahren nach Anspruch 12,
**dadurch gekennzeichnet, dass** erst der erste Klebestreifen (110) auf das erste Gehäuseelement (1) aufgebracht wird und dann der zweite Klebestreifen (120) auf das erste Gehäuseelement (1) aufgebracht wird.

14. Verfahren nach einem der Ansprüche 12 oder 13,
**dadurch gekennzeichnet, dass** der Applikationskopf vor dem Aufbringen in Schritt c) so bewegt wird, dass ein Teil der Kantenfläche (121, 122) des zweiten Klebestreifens (120) und ein Teil der ersten oder zweiten Kantenfläche (113, 116) des ersten Klebestreifens (110) in Kontakt gebracht werden.

15. Verfahren nach einem der Ansprüche 12 bis 14,
**dadurch gekennzeichnet, dass** der zweite Klebestreifen (120), in Form eines selbstklebenden elastischen Stanzteils (140) bereitgestellt wird und der Applikationskopf dazu ausgebildet ist, dieses Stanzteil (140) auf dem ersten Gehäuseelement (1) zu applizieren, so das eine Kantenfläche (121, 122) des selbstklebenden elastischen Stanzteils (140) mit der ersten und zweiten Kantenfläche (113, 116) des ersten Klebestreifens (110) in Kontakt gebracht wird und ein erster und zweiter Dichtspalt (10, 20) gebildet werden, und eine dritte Kantenfläche (123) des selbstklebenden elastischen Stanzteils (140) den Applikationsspalt (150) überdeckt wird.

## Claims

1. Housing comprising
- a first housing element (1),
- a second housing element (2), and
- arranged between the first housing element and the second housing element, a multipartite housing seal (100) for sealing off the housing interior from the housing exterior,
comprising a
first elastic adhesive strip (110) and a second elastic adhesive strip (120, 130), the first and second adhesive strips (110, 120, 130) being arranged between the first housing element and the second housing element,
**characterized in that**
- the first adhesive strip (110) comprises a first end portion (111) having a first front side (112) and a first edge face (113), and a second end portion (114) having a second front side (115) and a second edge face (116), and is arranged between the first housing element and the second housing element in such a way that
∘ the first front side (112) and the second front side (115) are arranged opposite one another and separated from one another by an application gap (150), and
∘ the first and second edge faces (113, 116) lie substantially in a plane, and
∘ where the first adhesive strip (110) is arranged between the first housing element and the second housing element, with the exception of the application gap (150), in a closed circulation, and
- the second adhesive strip (120, 130) is arranged between the first housing element and the second housing element in such a way that
∘ a first edge face (121) of the second adhesive strip (120) is in contact with the first edge face (113) of the first adhesive strip (110) and forms a first sealing gap (10), and
∘ a second edge face (122) of the second adhesive strip (120) is in contact with the second edge face (116) of the first adhesive strip (110) and forms a second sealing gap (20), and
∘ a third edge face (123) of the second adhesive strip (120) conceals the application gap (150), so that
if
the first housing element and the second housing element are pressed against one another with a force F, the first elastic adhesive strip (110) and the second elastic adhesive strip (120) are compressed and they expand in the direction of the edge faces (113, 121, 116, 122), with the effect that
the first edge face (121) of the second adhesive strip (120) and the first edge face (113) of the first adhesive strip (110) are pressed against one another and seal off the first sealing gap (10), and
the second edge face (122) of the second adhesive strip (120) and the second edge face (116) of the first adhesive strip (110) are pressed against one another and seal off the second sealing gap (20), thereby
preventing fluid communication between the housing interior and the housing exterior.

2. Housing according to Claim 1,
**characterized in that** the second adhesive strip (120) is arranged relative to the first adhesive strip (110) in such a way that a longitudinal direction (30) of the second adhesive strip (120)
- runs parallel to a longitudinal direction (30) of the first end portion (111), and
- runs parallel to a longitudinal direction (30) of the second end portion (114).

3. Housing according to Claim 1 or 2, **characterized in that** the first and/or second adhesive strip (110, 120) comprises a polymer foam layer (50), and a first side (44) of the polymer foam layer (50) has a pressure sensitive adhesive layer (51).

4. Housing according to Claim 3, **characterized in that** the polymer foam layer (50) itself is a pressure sensitive adhesive, more particularly a pressure sensitive adhesive, acrylate-based polymer foam.

5. Housing according to Claim 3 or 4, **characterized in that** the first and/or second adhesive strip (110, 120) comprises a further pressure sensitive adhesive layer (52), wherein a second side (41) of the polymer foam layer (50) bears the applied further pressure sensitive adhesive layer (52), and the second side (41) is opposite the first side (44).

6. Housing according to any of the claims Claim 3 to 5, **characterized in that** a second side (41) of the polymer foam layer (50), which is opposite the first side (44), has a thermoplastic film (53), or the further pressure sensitive adhesive layer (52) bears the applied thermoplastic film (53).

7. Housing according to any of the preceding claims, **characterized in that** the first adhesive strip (110) and second adhesive strip (120) have substantially the same thickness d, more particularly have a thickness d of between 0.1 mm +/- 0.02 mm and 8.0 mm +/- 0.2 mm, more preferably have a thickness d of between 1.5 mm +/- 0.2 mm and 3.0 mm +/- 0.2 mm.

8. Housing according to any of the preceding claims, **characterized in that** the first adhesive strip (110) and/or the second adhesive strip (120) are adhesive tapes, more particularly **in that** the first and second adhesive strips consist substantially of a self-adhesive composition, more particularly consist substantially of an acrylate-based adhesive.

9. Housing according to any of the preceding claims, **characterized in that** the second adhesive strip (120) is a self-adhesive elastic diecut (140).

10. Housing according to any of the preceding claims, **characterized in that** if the first housing element (1) and the second housing element (2) are pressed against one another with a force F, the thickness d of the first adhesive strip (110) and of the second adhesive strip (120) is reduced by 10% to 60%, more preferably is reduced by 30% to 50%.

11. Housing according to any of the preceding claims, **characterized in that** a length I of the second adhesive strip (120) amounts to at least the length l_{A} of the application gap (150) plus twice the width b of the first adhesive strip (110), more preferably amounts to at least the length l_{A} of the application gap (150) plus five times the width b of the first adhesive strip (110).

12. Method for automated application of a multipartite housing seal (100) in a housing according to any of Claims 1-11, comprising the steps of
a) providing the first housing element (1),
b) applying the first elastic adhesive strip (110) by means of a robot-guided application head along a first predetermined contour on the first housing element (1) by
- traveling the first contour and at the same time unwinding and pressing-on an adhesive strip material from an adhesive strip roll,
- removing the adhesive strip material at the end of the traveled first contour by the application head, and
- depositing the first adhesive strip material removed on the first housing element so that an application gap (150) is formed, and
wherein a first front side (112) of the first removed sealing strip material and a second front side (115) of the first removed adhesive strip material are arranged by the application head opposite one another and separated from one another by the application gap (150), and
c) applying the second elastic adhesive strip (120) by means of the robot-guided application head along a second predetermined contour on the first housing element (1) by
- traveling the second contour and at the same time unwinding the adhesive strip material from the adhesive strip roll and pressing-on the adhesive strip material,
- removing the adhesive strip material at the end of the traveled second contour by the application head,
- depositing the second removed adhesive strip material on the first housing element (1), and
wherein the second removed adhesive strip material is applied on the first housing element (1) by the robot-guided application head such that
- a first edge face (121) of the second adhesive strip (120) is in contact with a first edge face (113) of the first adhesive strip (110) and forms a first sealing gap (10), and
- a second edge face (122) of the second adhesive strip (120) is in contact with a second edge face (116) of the first adhesive strip (110) and forms a second sealing gap (20), and
- a third edge face (123) of the second adhesive strip (120) conceals the application gap (150).

13. Method according to Claim 12,
**characterized in that** first the first adhesive strip (110) is applied to the first housing element (1) and then the second adhesive strip (120) is applied to the first housing element (1).

14. Method according to either of Claims 12 and 13,
**characterized in that** the application head prior to application in step c) is moved such that a part of the edge face (121, 122) of the second adhesive strip (120) and a part of the first or second edge face (113, 116) of the first adhesive strip (110) are brought into contact.

15. Method according to any of Claims 12 to 14,
**characterized in that** the second adhesive strip (120) is provided in the form of a self-adhesive elastic diecut (140) and the application head is configured to apply this diecut (140) on the first housing element (1), so that an edge face (121, 122) of the self-adhesive elastic diecut (140) is brought into contact with the first and second edge faces (113, 116) of the first adhesive strip (110) and first and second sealing gaps (10, 20) are formed, and a third edge face (123) of the self-adhesive elastic diecut (140) conceals the application gap (150).

## Revendications

1. Boîtier comprenant
- un premier élément de boîtier (1),
- un deuxième élément de boîtier (2), et
- un joint de boîtier (100) en plusieurs parties agencé entre le premier élément de boîtier et le deuxième élément de boîtier pour étanchéifier l'intérieur du boîtier par rapport à l'extérieur du boîtier,
comprenant une
première bande adhésive élastique (110) et une deuxième bande adhésive élastique (120, 130), la première et la deuxième bande adhésive (110, 120, 130) étant agencées entre le premier élément de boîtier et le deuxième élément de boîtier,
**caractérisé en ce que**
- la première bande adhésive (110) comprend une première section d'extrémité (111) avec un premier côté frontal (112) et une première surface de bord (113) et une deuxième section d'extrémité (114) avec un deuxième côté frontal (115) et une deuxième surface de bord (116), et est agencée entre le premier élément de boîtier et le deuxième élément de boîtier de telle sorte que
o le premier côté frontal (112) et le deuxième côté frontal (115) sont agencés en face l'un de l'autre et séparés l'un de l'autre par un espace d'application (150), et
o les première et deuxième surfaces de bord (113, 116) se situent essentiellement dans un plan, et
o la première bande adhésive (110) étant agencée entre le premier élément de boîtier et le deuxième élément de boîtier, à l'exception de la fente d'application (150), dans un circuit fermé, et
- la deuxième bande adhésive (120, 130) est agencée entre le premier élément de boîtier et le deuxième élément de boîtier de telle sorte que
o une première surface de bord (121) de la deuxième bande adhésive (120) est en contact avec la première surface de bord (113) de la première bande adhésive (110) et forme un premier espace d'étanchéité (10), et
o une deuxième surface de bord (122) de la deuxième bande adhésive (120) est en contact avec la deuxième surface de bord (116) de la première bande adhésive (110) et forme un deuxième espace d'étanchéité (20), et
o une troisième surface de bord (123) de la deuxième bande adhésive (120) recouvre l'espace d'application (150), de telle sorte que lorsque
le premier élément de boîtier et le deuxième élément de boîtier sont pressés l'un contre l'autre avec une force F, la première bande adhésive élastique (110) et la deuxième bande adhésive élastique (120) sont comprimées et se dilatent en direction des surfaces de bord (113, 121, 116, 122), moyennant quoi
la première surface de bord (121) de la deuxième bande adhésive (120) et la première surface de bord (113) de la première bande adhésive (110) sont pressées l'une contre l'autre et étanchéifient le premier espace d'étanchéité (10), et
la deuxième surface de bord (122) de la deuxième bande adhésive (120) et la deuxième surface de bord (116) de la première bande adhésive (110) sont pressées l'une contre l'autre et étanchéifient le deuxième espace d'étanchéité (20), moyennant quoi
une communication de fluide entre l'intérieur du boîtier et l'extérieur du boîtier est empêchée.

2. Boîtier selon la revendication 1,
**caractérisé en ce que** la deuxième bande adhésive (120) est agencée par rapport à la première bande adhésive (110) de telle sorte qu'une direction longitudinale (30) de la deuxième bande adhésive (120)
- s'étend parallèlement à une direction longitudinale (30) de la première section d'extrémité (111) et
- s'étend parallèlement à une direction longitudinale (30) de la deuxième section d'extrémité (114).

3. Boîtier selon la revendication 1 ou 2, **caractérisé en ce que** la première et/ou la deuxième bande adhésive (110, 120) comprennent une couche de mousse polymère (50) et un premier côté (44) de la couche de mousse polymère (50) présente une couche de masse adhésive sensible à la pression (51).

4. Boîtier selon la revendication 3, **caractérisé en ce que** la couche de mousse polymère (50) est elle-même une masse adhésive sensible à la pression, notamment une mousse polymère à base d'acrylate adhésive sensible à la pression.

5. Boîtier selon la revendication 3 ou 4, **caractérisé en ce que** la première et/ou la deuxième bande adhésive (110, 120) comprennent une autre couche de masse adhésive sensible à la pression (52), l'autre couche de masse adhésive sensible à la pression (52) étant appliquée sur un deuxième côté (41) de la couche de mousse polymère (50), et le deuxième côté (41) étant opposé au premier côté (44).

6. Boîtier selon l'une quelconque des revendications 3 à 5, **caractérisé en ce qu'**un deuxième côté (41) de la couche de mousse polymère (50), opposé au premier côté (44), présente un film thermoplastique (53) ou le film thermoplastique (53) est appliqué sur l'autre couche de masse adhésive sensible à la pression (52).

7. Boîtier selon l'une quelconque des revendications précédentes, **caractérisé en ce que** la première bande adhésive (110) et la deuxième bande adhésive (120) présentent essentiellement la même épaisseur d, notamment présentent une épaisseur d comprise entre 0,1 mm +/- 0,02 mm et 8,0 mm +/- 0,2 mm, de manière particulièrement préférée présentent une épaisseur d comprise entre 1,5 mm +/-0,2 mm et 3,0 mm +/- 0,2 mm.

8. Boîtier selon l'une quelconque des revendications précédentes, **caractérisé en ce que** la première bande adhésive (110) et/ou la deuxième bande adhésive (120) sont des rubans adhésifs, notamment **en ce que** la première et la deuxième bande adhésive sont essentiellement constituées d'une masse adhésive autocollante, notamment essentiellement constituées d'une masse adhésive à base d'acrylate.

9. Boîtier selon l'une quelconque des revendications précédentes, **caractérisé en ce que** la deuxième bande adhésive (120) est une pièce découpée élastique autocollante (140).

10. Boîtier selon l'une quelconque des revendications précédentes, **caractérisé en ce que**, lorsque le premier élément de boîtier (1) et le deuxième élément de boîtier (2) sont pressés l'un contre l'autre avec une force F, l'épaisseur d de la première bande adhésive (110) et de la deuxième bande adhésive (120) est réduite de 10 % à 60 %, de manière particulièrement préférée de 30 % à 50 %.

11. Boîtier selon l'une quelconque des revendications précédentes, **caractérisé en ce qu'**une longueur l de la deuxième bande adhésive (120) est au moins égale à la longueur l_{A} de la fente d'application (150) plus deux fois la largeur b de la première bande adhésive (110), de manière particulièrement préférée au moins égale à la longueur l_{A} de la fente d'application (150) plus cinq fois la largeur b de la première bande adhésive (110).

12. Procédé d'application automatisée d'un joint de boîtier (100) en plusieurs parties dans un boîtier selon l'une quelconque des revendications 1 à 11, comprenant les étapes suivantes :
a) la fourniture du premier élément de boîtier (1),
b) l'application de la première bande adhésive élastique (110) au moyen d'une tête d'application guidée par robot le long d'un premier contour prédéterminé sur le premier élément de boîtier (1)
- en suivant le premier contour et simultanément en déroulant et en pressant un matériau de bande adhésive à partir d'un rouleau de bande adhésive,
- en sectionnant le matériau de bande adhésive à l'extrémité du premier contour parcouru par la tête d'application, et
- en déposant le premier matériau de bande adhésive sectionné sur le premier élément de boîtier de manière à former une fente d'application (150), et
un premier côté frontal (112) du premier matériau de bande d'étanchéité sectionné et un deuxième côté frontal (115) du premier matériau de bande adhésive sectionné étant agencés par la tête d'application en face l'un de l'autre et séparés l'un de l'autre par la fente d'application (150), et
c) l'application de la deuxième bande adhésive élastique (120) au moyen de la tête d'application guidée par robot le long d'un deuxième contour prédéterminé sur le premier élément de boîtier (1)
- en suivant le deuxième contour et simultanément en déroulant le matériau de bande adhésive à partir du rouleau de bande adhésive et en pressant le matériau de bande adhésive,
- en sectionnant le matériau de bande adhésive à l'extrémité du deuxième contour parcouru par la tête d'application,
- en déposant le deuxième matériau de bande adhésive sectionné sur le premier élément de boîtier (1), et
le deuxième matériau de bande adhésive sectionné étant appliqué sur le premier élément de boîtier (1) par la tête d'application guidée par robot de telle sorte que
- une première surface de bord (121) de la deuxième bande adhésive (120) est en contact avec une première surface de bord (113) de la première bande adhésive (110) et forme un premier espace d'étanchéité (10), et
- une deuxième surface de bord (122) de la deuxième bande adhésive (120) est en contact avec une deuxième surface de bord (116) de la première bande adhésive (110) et forme un deuxième espace d'étanchéité (20), et
- une troisième surface de bord (123) de la deuxième bande adhésive (120) recouvre l'espace d'application (150).

13. Procédé selon la revendication 12, **caractérisé en ce que** la première bande adhésive (110) est d'abord appliquée sur le premier élément de boîtier (1), puis la deuxième bande adhésive (120) est appliquée sur le premier élément de boîtier (1).

14. Procédé selon l'une quelconque des revendications 12 ou 13, **caractérisé en ce qu'**avant l'application de l'étape c), la tête d'application est déplacée de manière à mettre en contact une partie de la surface de bord (121, 122) de la deuxième bande adhésive (120) et une partie de la première ou deuxième surface de bord (113, 116) de la première bande adhésive (110).

15. Procédé selon l'une quelconque des revendications 12 à 14, **caractérisé en ce que** la deuxième bande adhésive (120) est fournie sous la forme d'une pièce découpée élastique autocollante (140) et la tête d'application est configurée pour appliquer cette pièce découpée (140) sur le premier élément de boîtier (1) de telle sorte qu'une surface de bord (121, 122) de la pièce découpée élastique autocollante (140) est mise en contact avec la première et deuxième surface de bord (113, 116) de la première bande adhésive (110) et qu'une première et une deuxième fente d'étanchéité (10, 20) sont formées, et qu'une troisième surface de bord (123) de la pièce découpée élastique autocollante (140) recouvre la fente d'application (150).
